# EUROPEAN PATENT SPECIFICATION

(11) **EP 4 192 019 B1**
(45) Date of publication and mention of the grant of the patent: **07.10.2026**
(21) Application number: 21860220.9
(22) Date of filing: 17.08.2021
(51) Int. Cl.: H04L 65/1096, H04N 21/239, H04L 65/1069

(54) **MEDIA RESOURCE PLAYBACK METHOD AND RELATED DEVICE**
MEDIENRESSOURCENWIEDERGABEVERFAHREN UND ZUGEHÖRIGE VORRICHTUNG
PROCÉDÉ DE LECTURE DE RESSOURCE DE MÉDIA ET DISPOSITIF ASSOCIÉ

(30) Priority: 31.08.2020 CN 202010901206
(43) Date of publication of application: 07.06.2023
(73) Proprietor: Huawei Technologies Co., Ltd., Shenzhen, Guangdong 518129 (CN)
(72) Inventor: YANG, Guozhong, Shenzhen, Guangdong 518129 (CN); WU, Kanghua, Shenzhen, Guangdong 518129 (CN); WANG, Dong, Shenzhen, Guangdong 518129 (CN); WU, Shisheng, Shenzhen, Guangdong 518129 (CN)
(74) Representative: Pfenning, Meinig & Partner mbB
(86) International application number: PCT/CN2021/113116
(87) International publication number: WO 2022/042382

(56) References cited:
- EP-A1- 1 976 253
- EP-A1- 2 451 144
- EP-A1- 3 806 416
- CN-A- 110 798 575
- CN-A- 110 891 123
- CN-A- 110 891 123
- CN-A- 111 416 910
- CN-A- 111 491 062
- CN-A- 111 510 414
- US-A1- 2009 262 915
- US-A1- 2010 226 483
- US-A1- 2016 044 112

## Description

### TECHNICAL FIELD

This application relates to the field of communication technologies, and in particular, to a media resource playing method and a related apparatus.

### BACKGROUND

With continuous development of communication technologies, the voice over long term evolution (voice over long term evolution, VoLTE) technology gradually goes into people's life, and provides various types of media resource experience for people. For example, when making a voice call, users can enjoy video experience, such as a video ring back tone and a video customer service. This increases interest for users before the call is answered, and greatly improves call experience of users.

At present, a media resource playing method is generally a CT (communication technology, communication technology) domain-based method for media resource playing. The CT domain may also be referred to as a telecommunication domain. A corresponding process of media resource playing may be: A calling terminal initiates a call to a called terminal. After the called terminal rings, a media server in the CT domain pulls, based on user subscription information from a media resource server, a media resource corresponding to the user subscription information, and then indicates the media resource server to start playing the media resource for the calling terminal after receiving a play acknowledgment message from the calling terminal.

In the foregoing solution, the media server in the CT domain plays the media resource in the CT domain for the user in a call phase, but merely a picture of the media resource can be displayed in a call window. Therefore, the playing form is single and user experience is poor.

CN110891123A and EP3806416A1 disclose an interaction information transmission method and apparatus. The method includes: receiving, by a calling terminal, an SDP message sent by an RBT-AS, where the SDP message includes interaction information related to a video ring back tone; receiving, by the calling terminal, a video ring back tone media stream sent by an RBT-MRS, where the video ring back tone media stream includes the video ring back tone; and playing, by the calling terminal, the video ring back tone in a display interface, and displaying interaction content related to the interaction information. **In** this application, the RBT-AS configures the interaction information into the SDP message and sends the SDP message to the calling terminal, so that after obtaining the SDP message, the calling terminal does not need to perform decoding and can directly obtain the interaction information from the SDP message. In addition, when sending the interaction information, the RBT-AS that serves as a transmit end does not need to encode the interaction information either. Therefore, encoding and decoding processes are not required at the transmit end and a receive end respectively, and extra processing overheads are avoided.

EP1976253A1 discloses a method and system to avoid the cross-talk of color ringing back tone. When multiple entities in network provide the color ringing back tone service for a call simultaneously, on the basis of predisposed policy, the application server judges whether the ringing back tone information or suggestive tone information from called party should be shielded. If the judged result is true, based on the service logic, the ringing back tone played by called party is shielded and the ringing back tone provided by increment service is played for calling user. Thus, the said method and system can avoid the cross-talk problem, which is brought by playing ringing back tone for calling user from multiple parties, and can provide the accordant experience of increment service for all users. Whether the called user is color ringing back tone user or not, the said method and system do not provide different ringing back tones. Because the said method and system judge whether the ringing back tone played by called party is shielded, they can directly transmit the ringing back tone or suggestive tone of called party to calling party on the basis of requirement. An application server also is disclosed.

US2009262915A1 discloses a method for implementing Customized Ringing Signal (CRS) services. The method includes: receiving a call request initiated by a caller terminal; obtaining a policy of playing a CRS tone according to the call request, where the policy is a policy of playing a CRS tone, namely, a caller CRS tone or a callee CRS tone, or a policy of filtering the CRS tone; and playing the CRS tone to a callee according to the policy. By setting a policy of playing the CRS tone to the callee in the network or the callee terminal, the users enjoy the CRS services at their own discretion.
US2010226483A1 discloses a method of and a communications system for playing a message to a calling party when the calling party calls a called party and the called party is alerted to the call. The message is also played after the called party disconnects from the call. The play of the message may be put on hold when the called party answers the call and the play of the message may be continued when the called party disconnects from the call. The message may be replayed when the called party disconnects from the call. During play of the message the calling party may be provided connect control of the play.

### SUMMARY

The invention is defined by the subject-matter of the appended claims. Embodiments and aspects which are not covered by the invention should be considered as examples useful in understanding the invention. Embodiments of this application provide a media resource playing method and a related apparatus, to implement media interaction in a color ring back tone scenario, enrich experience of color ring back tone users, and increase interest of a video ring back tone service. Technical solutions of the media resource playing method and related apparatus are as follows:

According to a first aspect, a media resource playing method is provided, and is executed by a calling terminal. An implementation process of the method may be as follows:
sending a call request to a called terminal, where the call request is passed through a first media server;
determining resource information of a first media resource provided by the first media server;
sending an interaction data obtaining request to a second media server via a target application client, where the interaction data obtaining request carries the resource information of the first media resource;
receiving interaction data of the first media resource that is returned by the second media server based on the resource information;
receiving and playing the first media resource sent by the first media server; and
displaying the interaction data of the first media resource on a user interface for playing the first media resource.

In the technical solution provided in this embodiment of this application, the interaction data of the first media resource is obtained by using the second media server, so that the calling terminal can display the interaction data such as an interactive button, on-screen comments, and an animation effect on a layer overlaid on a screen of the calling terminal while playing the first media resource. This implements media interaction in a color ring back tone scenario, enriches experience of color ring back tone users, and improves interest of a video ring back tone service. With the development and commercial use of 5G, in the background that IT network resources are not bottleneck and a network delay is shorter, the video ring back tone service can be extended more flexibly, for example, video playing is supported among stacked layers, an interaction function is provided on a video page, and rolling switching between video content is supported, to improve interest of the video ring back tone service.

In a possible implementation, the first media server is a server in a communication technology CT domain, and the second media server is a server in an Internet technology IT domain. Interaction data in the IT domain provides supplement for media resource playing in the CT domain. This improves interest and flexibility of the video ring back tone service.

In a possible implementation, the determining resource information of a first media resource provided by the first media server includes any one of the following: obtaining the resource information of the first media resource from a first media negotiation message sent by the first media server; and obtaining, from a header of a media stream of the first media resource transmitted by the first media server, the resource information carried by the first media resource. In this implementation, a plurality of manners of obtaining the resource information of the first media resource are provided. This improves flexibility of the implementation.

In a possible implementation, the first media negotiation message is an update message, and the resource information is included in session description protocol SDP information of the update message.

In a possible implementation, the resource information is included in supplemental enhancement information SEI of the header of the media stream.

In a possible implementation, the interaction data is interaction content data, and before the sending an interaction data obtaining request to a second media server via a target application client, the method further includes:
sending a display data obtaining request to the second media server, where the display data obtaining request indicates to obtain display data of an interaction control; and
receiving address information returned by the second media server based on the display data obtaining request, where the address information provides the display data of the interaction control; and obtaining the display data of the interaction control from the second media server based on the address information.

In this implementation, the display data of the interaction control is first obtained from the second media server, and then the interaction content data is obtained from the second media server based on the resource information. In the foregoing process, the display data of the interaction control can be obtained in advance, and then the interaction content data is obtained. Therefore, when the first media resource is subsequently played, the display data of the interaction control does not need to be obtained from the second media server. This reduces an amount of obtained data and a display delay.

In a possible implementation, the interaction data includes the interaction content data and the display data of the interaction control.

In this implementation, the interaction content data and the display data of the interaction control are obtained simultaneously, ensuring synchronization between obtaining and display of data.

In a possible implementation, after the displaying the interaction data of the first media resource on a user interface for playing the first media resource, the method further includes: if an operation for triggering any interaction control is detected, sending, to the second media server, an interaction request corresponding to the interaction control, where the interaction request is for implementing first media resource-based interaction. This implementation provides a function of interaction with the IT domain based on the interaction control, enriches visualized content of media resources in the CT domain, and improves experience of a color ring back tone service.

In a possible implementation, after the displaying the interaction data of the first media resource on a user interface for playing the first media resource, the method further includes: disabling display of the interaction data of the first media resource if a pick-up message of the called terminal is received.

In a possible implementation, after the displaying the interaction data of the first media resource on a user interface for playing the first media resource, the method further includes: stopping playing the first media resource and displaying a pause picture for the first media resource if a pick-up message of the called terminal is received. In this implementation, display of the pause picture is reserved. This provides an entry for a subsequent operation.

In a possible implementation, after the stopping playing the first media resource and displaying a pause picture for the first media resource if a pick-up message of the called terminal is received, the method further includes: if an operation for continuing playing is detected on the pause picture, obtaining a third media resource from the second media server and playing the third media resource, where the third media resource matches the first media resource. In the foregoing process, the calling user may click the pause picture at any moment during the call or after the call, and obtain a media resource with the same media content from the IT domain. This provides continuous and complete audiovisual experience.

In a possible implementation, after the stopping playing the first media resource and displaying a pause picture for the first media resource if a pick-up message of the called terminal is received, the method further includes: if an operation for triggering the pause picture is detected, displaying a portal website page on the started target application client. In the foregoing embodiment, if the calling user expects to access the portal website, the calling user may click the pause picture. This operation is convenient and simple.

In a possible implementation, after the stopping playing the first media resource if a pick-up message of the called terminal is received, and displaying a pause picture for the first media resource, the method further includes: closing the target application client if an operation for closing the pause picture or a screen-off state is detected. In this implementation, a quick and convenient manner for closing is provided, improving operation performance.

In a possible implementation, after the operation for closing the pause picture or the screen-off state is detected, the method further includes: sending a session end message to the second media server, where the session end message indicates session release. After receiving the session end message sent by the calling terminal, the second media server releases interaction content data of a preloaded second media resource, to save memory space.

In a possible implementation, the method further includes: obtaining a second media resource from the second media server via the target application client.

The playing the first media resource sent by the first media server includes: playing the first media resource in full screen.

The method further includes: playing the second media resource in a mute mode in a floating window on the user interface for playing the first media resource.

In a possible implementation, the method further includes: playing the second media resource in full screen; and

The playing the first media resource sent by the first media server includes: playing the first media resource in a mute mode in a floating window on a user interface for playing the second media resource.

In a possible implementation, the playing the first media resource sent by the first media server includes: playing the first media resource in a floating window; and
the method further includes: playing the second media resource in a floating window.

In the foregoing process, a plurality of different manners of playing media resources in the IT domain and the CT domain are provided. This provides an intuitive interface display effect for users, and also supports flexible selection of the media resources for users. Further, one media resource is displayed in full screen, and another media resource is displayed in a floating window. This forms a picture-in-picture effect, and provides a good visual feeling on the premise of not causing visual confusion. Optionally, a placement position is further provided for carriers. The advertiser may place media resources on the first media server or the second media server, to push to the terminal for marketing purposes.

In a possible implementation, the interaction data includes at least one of the following: access data on homepage, like data, comment data, shared data, and downloaded data. In a possible implementation, the interaction control includes at least one of the following: an access control on homepage, a like control, a comment control, a sharing control, and a download control. The foregoing implementation enriches an interaction function, and greatly improves user experience.

According to a second aspect, a media resource playing method is provided, and is executed by a second media server. An implementation process of the method may be as follows:
receiving an interaction data obtaining request that is sent by a calling terminal via a target application client, where the interaction data obtaining request carries resource information of a first media resource;
determining interaction data of the first media resource based on the resource information; and
returning the interaction data to the calling terminal.

In the technical solution provided in this embodiment of this application, the interaction data of the first media resource is obtained by using the second media server, so that the calling terminal can display the interaction data such as an interactive button, on-screen comments, and an animation effect on a layer overlaid on a screen of the calling terminal while playing the first media resource. This implements media interaction in a ring back tone scenario, enriches experience of ring back tone users, and improves interest of a video ring back tone service. With the development and commercial use of 5G, in the background that IT network resources are not bottleneck and a network delay is shorter, the video ring back tone service can be extended more flexibly, for example, video playing is supported among stacked layers, an interaction function is provided on a video page, and rolling switching between video content is supported, to improve interest of the video ring back tone service.

In a possible implementation, the determining interaction data of the first media resource based on the resource information includes: determining address information corresponding to the resource information, where the address information provides the interaction data; and
the returning the interaction data to the calling terminal includes: returning the address information to the calling terminal.

In a possible implementation, the interaction data is the interaction content data, and before the receiving an interaction data obtaining request that is sent by a calling terminal via a target application client, the method further includes:
receiving a display data obtaining request that is sent by the calling terminal via the target application client, where the display data obtaining request indicates to obtain display data of an interaction control;
determining address information of the display data of the interaction control, where the address information provides the display data of the interaction control; and
returning the address information to the calling terminal.

In this implementation, the second media server obtains the display data of the interaction control in advance. This ensures timely display of the interaction control for subsequent media resource playing, and avoids delayed display.

In a possible implementation, after the determining address information of the display data of the interaction control, the method further includes: preloading the display data of the interaction control.

According to the foregoing preloading method, the problem of delayed display of the interaction control can be mitigated, and efficiency for obtaining the display data is improved. In this way, a problem of delayed display of the control does not occur subsequently when a media resource is played.

In a possible implementation, the display data obtaining request further carries related information of the call in which the calling terminal participates, and after the receiving the display data obtaining request that is sent by the calling terminal via the target application client, the method further includes: performing legality authentication and function service authentication on the user based on the related information of the call. In the foregoing process, the user is authenticated to verify legality and/or validity of the user, to ensure secure display of the interaction control during subsequent media resource playing. This improves security and reliability of display of the interaction control in the IT domain.

In a possible implementation, after the returning the interaction data to the calling terminal, the method further includes: receiving a resource obtaining request sent by the calling terminal, where the resource obtaining request carries resource information of the first media resource; determining, based on the resource information, a third media resource corresponding to the resource information, where the third media resource matches the first media resource; and returning the third media resource to the calling terminal. In the foregoing process, the calling user may click the pause picture at any moment during the call or after the call, and obtain a media resource with the same media content from the IT domain. This provides continuous and complete audiovisual experience.

In a possible implementation, after the determining, based on the resource information, a third media resource corresponding to the resource information, the method further includes: establishing a session with the calling terminal based on the third media resource, where the session records playback information of the third media resource.

In a possible implementation, after the returning the third media resource to the calling terminal, the method further includes: releasing the session with the calling terminal if a session end message of the calling terminal is received, where the session end message indicates that the session ends. By releasing the session in time, a waste of server resources can be avoided.

According to a third aspect, a media resource playing apparatus is provided, and is configured to perform the foregoing media resource playing method. Specifically, the media resource playing apparatus includes a functional module configured to perform the media resource playing method provided in any one of the first aspect or the optional manners of the first aspect.

According to a fourth aspect, a media server is provided, and is configured to perform the foregoing media resource playing method. Specifically, the media server includes a functional module configured to perform the media resource playing method provided in any one of the second aspect or the optional manners of the second aspect.

According to a fifth aspect, a media resource playing method is provided. The method includes:

A calling terminal sends a call request to a called terminal, where the call request is passed through a first media server; the calling terminal determines resource information of a first media resource provided by the first media server; and the calling terminal sends an interaction data obtaining request to a second media server via a target application client, where the interaction data obtaining request carries the resource information of the first media resource;
the second media server receives an interaction data obtaining request that is sent by the calling terminal via a target application client, where the interaction data obtaining request carries the resource information of the first media resource; the second media server determines interaction data of the first media resource based on the resource information; and the second media server returns the interaction data to the calling terminal; and
the calling terminal receives the interaction data of the first media resource that is returned by the second media server based on the resource information; receives and plays the first media resource sent by the first media server; and displays the interaction data of the first media resource on a user interface for playing the first media resource.

According to a sixth aspect, a media resource playing system is provided. The system includes a calling terminal, a first media server, and a second media server. The calling terminal, the first media server, and the second media server are configured to perform the media resource playing method provided in the fifth aspect.

According to a seventh aspect, a terminal is provided. The terminal includes a processor and a memory. The memory stores at least one piece of program code, and the program code is loaded and executed by the processor to implement the media resource playing method in any one of the first aspect or the optional manners of the first aspect.

According to an eighth aspect, a server is provided. The server includes a processor and a memory. The memory stores at least one piece of program code, and the program code is loaded and executed by the processor to implement the media resource playing method in any one of the second aspect or the optional manners of the second aspect.

According to a ninth aspect, a computer program product is provided. When the computer program product runs on a computer, the computer is enabled to perform some or all steps of any method in any one of the first aspect, the second aspect, or the optional manners of the first aspect and the second aspect.

According to a tenth aspect, a computer storage medium is provided. The computer storage medium stores at least one piece of program code, and the program code is loaded and executed by a processor to implement the media resource playing method in any one of the first aspect, the second aspect, or the optional manners of the first aspect and the second aspect.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show merely some embodiments of this application, and a person of ordinary skill in the art may still derive other drawings from these accompanying drawings without creative efforts.
FIG. 1 is a diagram of an architecture of a media resource system according to an embodiment of this application;
FIG. 2 is a schematic diagram of services provided by a video ring back tone cloud platform in different domains according to an embodiment of this application;
FIG. 3 is a diagram of an architecture of a media resource system according to an embodiment of this application;
FIG. 4 is a diagram of a system architecture of a terminal according to an embodiment of this application;
FIG. 5 is a schematic diagram of a structure of a terminal according to an embodiment of this application;
FIG. 6 is a schematic diagram of a structure of a server according to an embodiment of this application;
FIG. 7A and FIG. 7B and FIG. 7C are a flowchart of a media resource playing method according to an embodiment of this application;
FIG. 8 is a schematic diagram of media resource playing according to an embodiment of this application;
FIG. 9 is a schematic diagram of an update message carrying resource information according to an embodiment of this application;
FIG. 10 is a schematic diagram of a media stream carrying resource information according to an embodiment of this application;
FIG. 11 is a flowchart of a media resource playing method according to an embodiment of this application;
FIG. 12 is a schematic diagram of media resource playing according to an embodiment of this application;
FIG. 13 is a schematic diagram of media resource playing according to an embodiment of this application;
FIG. 14 is a flowchart of an interaction method based on media resource playing according to an embodiment of this application;
FIG. 15 is a flowchart of a method for handling pause playback based on media resource playing according to an embodiment of this application;
FIG. 16 is a schematic diagram of media resource playing according to an embodiment of this application;
FIG. 17 is a schematic diagram of media resource playing according to an embodiment of this application;
FIG. 18A and FIG. 18B and FIG. 18C are a flowchart of a media resource playing method according to an embodiment of this application;
FIG. 19 is a schematic diagram of a structure of a media resource playing apparatus according to an embodiment of this application; and
FIG. 20 is a schematic diagram of a structure of a media server according to an embodiment of this application.

### DESCRIPTION OF EMBODIMENTS

The following further describes in detail embodiments of this application with reference to accompanying drawings.

Embodiments of this application are applicable to a 4th generation (4G) mobile communication network architecture, a 5th generation (5G) mobile communication network architecture, or a future network. For ease of description, the following describes a network architecture and a method procedure of the solutions by using a 4G-based VoLTE network as an example.

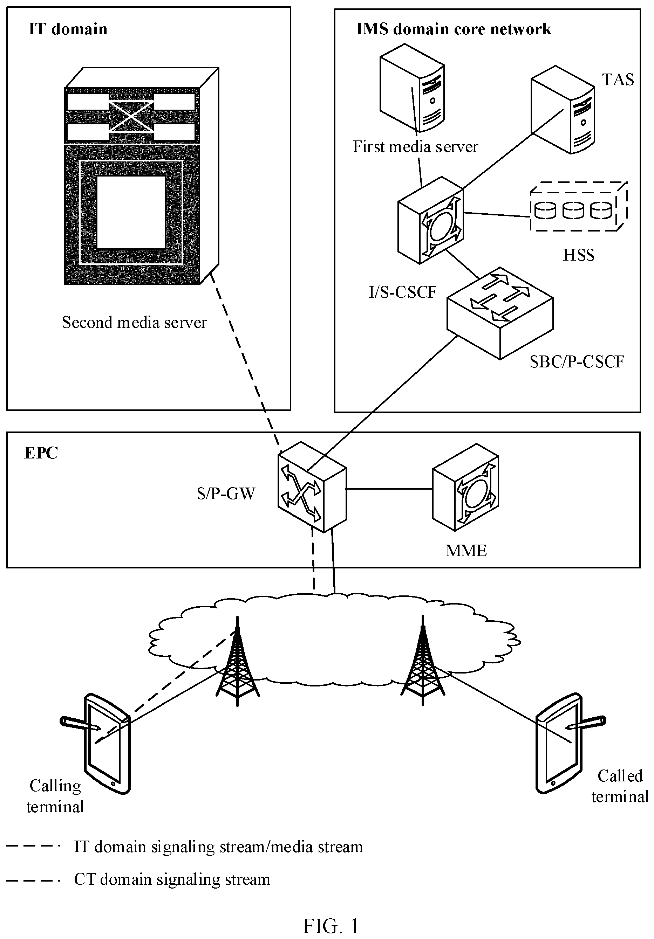

FIG. 1 is a diagram of an architecture of a media resource system according to an embodiment of this application. Refer to FIG. 1. The system may include a first media server in CT domain, a second media server in IT domain, a calling terminal, and a called terminal.

The CT domain may also be referred to as a telecommunication domain, and communication is implemented in the CT domain by using an evolved packet core network (evolved packet core, EPC), a media subsystem (internet protocol multimedia subsystem, IMS) domain core network, and the like. The IMS domain core network includes several application servers (application servers, ASs), for example, a first media server. The first media server is configured to provide playing of a first media resource for a terminal. For example, the first media server is also referred to as a video ring back tone platform when providing a video ring back tone service. The first media server may include a media application server and a media resource server (media resource subsystem, MRS). The media resource server is also referred to as a ring back tone platform. The media resource server is configured to provide media resources such as video ring back tones, a video ring tones, video advertisements, and a video customer service. For example, the media resource server makes and manages the foregoing media resources. The media application server and the media resource server may be co-deployed or physically separated. The media application server processes a session initiation protocol (session initiation protocol, SIP) signaling message, and the media resource server provides an audio stream and/or a video stream for a calling terminal and/or a called terminal.

In addition, the IMS domain core network further includes: a service-call session control function (serving-call session control function, S-CSCF) device, an interrogation-call session control function (interrogating-call session control function, I-CSCF) device, a proxy-call session control function (proxy-call session control function, P-CSCF) device, a home subscriber server (home subscriber server, HSS) device, a session border controller (session border controller, SBC) device, and several application servers such as a telephony application server (telephony application server, TAS), a multimedia telephony application server (multimedia telephony application server, MMTel AS), and a service continuity application server (server centralization and continuity application server, SCC AS). The I-CSCF device and the S-CSCF device may be co-deployed, and may be referred to as an "I/S-CSCF" device for short. The SBC device and the P-CSCF device may be co-deployed, and may be referred to as an "SBC/P-CSCF" device for short. The EPC may include a packet data network gateway PGW device, a serving gateway SGW device, and a mobility management entity (mobility management entity, NΠvIE) device.

The S/P-GW device is configured to provide functions of logical entities of a serving gateway and a packet data network gateway. The SGW is a local mobility anchor, and is mainly oriented to a radio access network for transmission of service plane data. The PGW is an EPS anchor, and is mainly oriented to another data network to implement access interaction between a plurality of public data networks. The SGW device may be configured to connect the IMS core network to a wireless network. The PGW device may be configured to connect the IMS core network to an internet protocol (internet protocol, IP) network. The MME device is a core device in the EPC network and provides a function of an MME logical entity.

Refer to FIG. 1. When the first media server interacts with the calling terminal, a message data stream of the first media server is a signaling stream in a CT domain, and a control message of the first media server is a SIP message. For transmission of a media resource, a media data stream of the first media server is a media stream in the CT domain, that is, an RTP media stream. The terminal accesses the IMS domain core network via the S/P-GW in the EPC to access the first media server. For example, in a call procedure, the calling terminal exchanges a SIP message with a network device in the IMS domain core network, and the first media server performs a procedure such as media negotiation with the calling terminal. If a media resource in the CT domain exists in this call, the first media server pushes the first media resource to the calling terminal in a form of an RTP media stream.

The IT domain may also be referred to as an Internet domain. The second media server is configured to provide an interaction data service for users, and can further provide services such as media resource playing. The second media server further provides a visualized interface entry, to provide services such as media resource setting and management for users. Optionally, the first media server further provides a setting function. The user performs setting via a target application client, to obtain setting information indicating customized display such as an overlaid style. Optionally, the second media server stores user information, or is associated with a database, for storing user information, display data of an interaction control, interaction content data of a media resource, a media resource, and the like in the database. In embodiments of this application, an example in which the second media server is associated with an interaction database is used for description.

In embodiments of this application, the target application client, for example, a video ring back tone application, is installed on the calling terminal. The calling terminal can obtain, via the target application client, the interaction data service provided by the second media server, that is, obtain interaction data of a media resource provided by the second media server, and perform display based on media resource playing in a call process.

The second media server provides the interaction data service. The user can subscribe to the interaction data service via the target application client. For example, the user accesses a portal website of the second media server via the target application client, and performs an operation on the portal website for subscription. After the subscription is completed, the second media server stores user information in the interaction database, to subsequently provide the interaction data service based on the stored information. Optionally, the second media server further provides a media resource subscription service, to subscribe to a media resource to be played in the call process, so that the terminal obtains the media resource via the target application client in the call process for playing.

Optionally, when the second media server and the calling terminal perform signaling interaction, a transfer protocol to be used is a hypertext transfer protocol (hypertext transfer protocol, HTTP) or a hypertext transfer protocol secure (hypertext transfer protocol over secure socket layer, HTTPS). In embodiments of this application, the second media server supports a plurality of transfer protocols. Compared with a single signaling stream protocol in the CT domain, the plurality of transfer protocols can implement signaling interaction-based media resource playing more conveniently and flexibly.

Optionally, when the second media server and the calling terminal perform media stream transmission, a real time messaging transfer protocol (real time messaging protocol, RTMP) or an HTTP streaming protocol (hypertext transfer protocol flash video, Http Flv) is used. In embodiments of this application, the second media server supports a plurality of transfer protocols. Compared with the single signaling stream protocol in the CT domain, the plurality of transfer protocols can implement media resource playing more conveniently and flexibly.

It can be noted that, when the second media server interacts with the calling terminal, a signaling stream or a media stream in the IT domain is used. When the calling terminal interacts with the first media server, a signaling stream or a media stream in the CT domain is used. Correspondingly, when the second media server interacts with the calling terminal, if the HTTP protocol is used, a control message to be exchanged between the second media server and the calling terminal is an HTTP message, an HTTPS message, an HTTP response, or an HTTPS response, and a message data stream is a signaling stream in the IT domain, for example, a hypertext markup language flow (hypertext markup language flow, HTML Flow). For transmission of a media resource, a media data stream is a media stream in the IT domain, for example, an RTMP media stream and an Http Flv media stream.

Refer to FIG. 1. The calling terminal accesses the second media server via a gateway. The gateway may include a packet data network gateway (packet data network gateway, PGW) device and a serving gateway (serving gateway, SGW) device. The PGW device and the SGW device may be co-deployed, and may be referred to as an "S/P-GW" device. Specifically, after initiating a call, the calling terminal sends a corresponding request to the S/P-GW via the target application client, and the S/P-GW sends the request to the second media server. In a process in which the calling terminal performs a CT domain call, the target application client accesses the second media server via an IT network, obtains the signaling stream in the IT domain, and displays the interaction control and corresponding interaction content data on a user interface for playing the media resource in the CT domain in a ringing phase. In this way, an interaction function based on the CT domain color ring back tone service is implemented. It can be understood that a media resource in the IT domain is played in a call process in the CT domain, and obtaining of the media resource is triggered by the call process in the CT domain. However, because interaction between the calling terminal and the second media server is performed through the IT domain, the call process in the CT domain is not affected, and the call can be ensured to be normally performed.

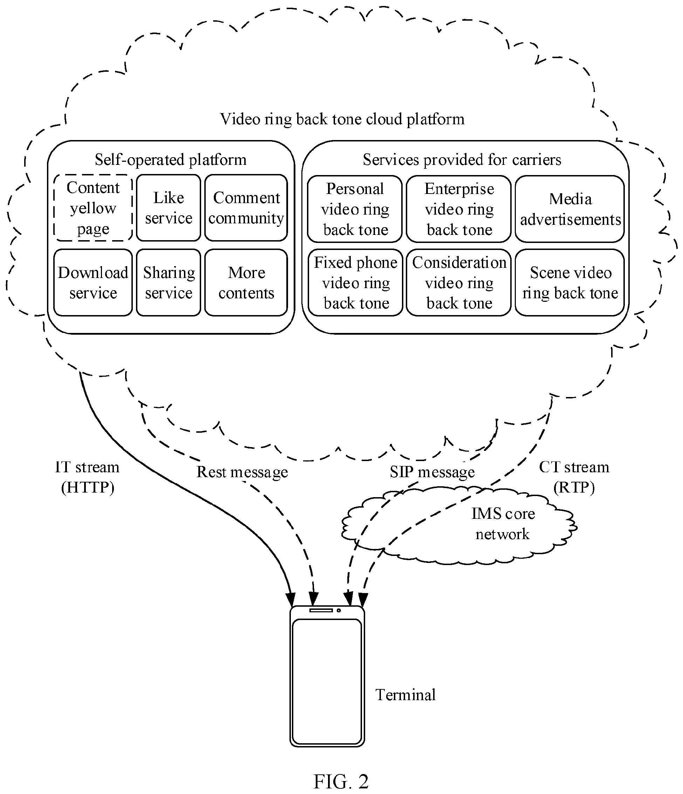

Optionally, refer to a schematic diagram of services provided by a video ring back tone cloud platform in different domains shown in FIG. 2. A first media server provided in embodiments of this application is provided for carriers to perform related services such as advertisement placement and enterprise promotion, for example, a personal video ring back tone, an enterprise video ring back tone, a media advertisement, a fixed-line video ring back tone, a care video ring back tone, and a scenario video ring back tone. A terminal accesses the first media server through a CT domain. The terminal interacts with the first media server based on a signaling stream in the CT domain, for example, performs signaling interaction via a SIP message. The first media server sends a media resource to the terminal in a form of a media stream in the CT domain, for example, sends a first media resource via an RTP media stream. A second media server can provide interaction services, such as any one of a content yellow page service, a like service, a comment service, a download service, a sharing service, and a more content service. Optionally, the second media server can further provide a video ring back tone service in an IT domain in a ringing phase. A second media resource is used subsequently to represent a media resource in the IT domain. The terminal accesses the second media server through the IT domain. The terminal and the second media server perform interaction based on a signaling stream in the IT domain, for example, perform signaling interaction via an HTTP message, an HTTPS message, an HTTP response, or an HTTPS response. The first media server sends a media resource to the terminal in a form of a media stream in the IT domain, for example, sends the second media resource via an RTMP media stream.

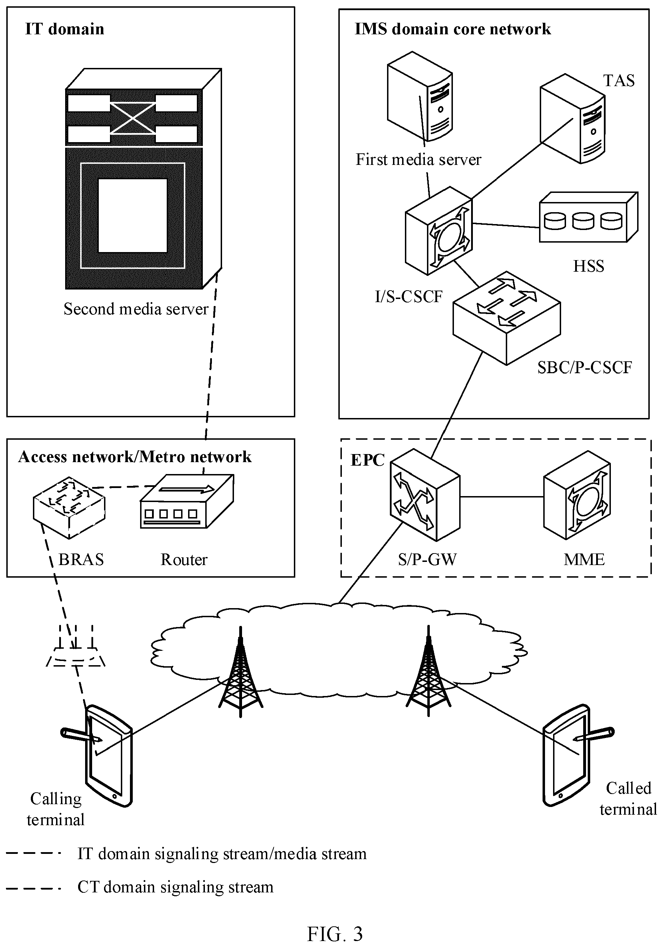

For a calling terminal, there are various network access manners. FIG. 1 is described by using an example in which the calling terminal accesses a network via a gateway. In another system architecture, the calling terminal may access the network via another network device, for example, via an access network or a metropolitan area network. FIG. 3 is a diagram of an architecture of a media resource system according to an embodiment of this application. The system includes a second media server in an access network or a metropolitan area network or an IT domain, a first media server in a CT domain, a calling terminal, and a called terminal. The access network or the metropolitan area network includes a broadband remote access server (broadband remote access server, BRAS) and a router. The BRAS is a network device for implementing access, authentication, accounting, control, and management of broadband network users in various broadband access manners. The router is a device connecting local area networks and wide area networks, and can automatically select and set a route based on a channel condition, to transmit a message through an optimal path. For other network devices, refer to the embodiment shown in FIG. 1. A terminal accesses the second media server by forwarding, by the BRAS and the router, a resource obtaining request sent by a target application client to the second media server, to play a media resource provided in embodiments of this application. For signaling interaction and media resource transmission between the calling terminal and the first media server, refer to the embodiment in FIG. 1.

The system architectures in FIG. 1 and FIG. 3 are system architectures shown based on different network access manners of a terminal. With popularization of a 4G network and construction of a 5G network, both network bandwidth and a delay of a mobile Internet and a home broadband fixed network have very high availability. This can ensure communication security and reliability, and has high communication efficiency.

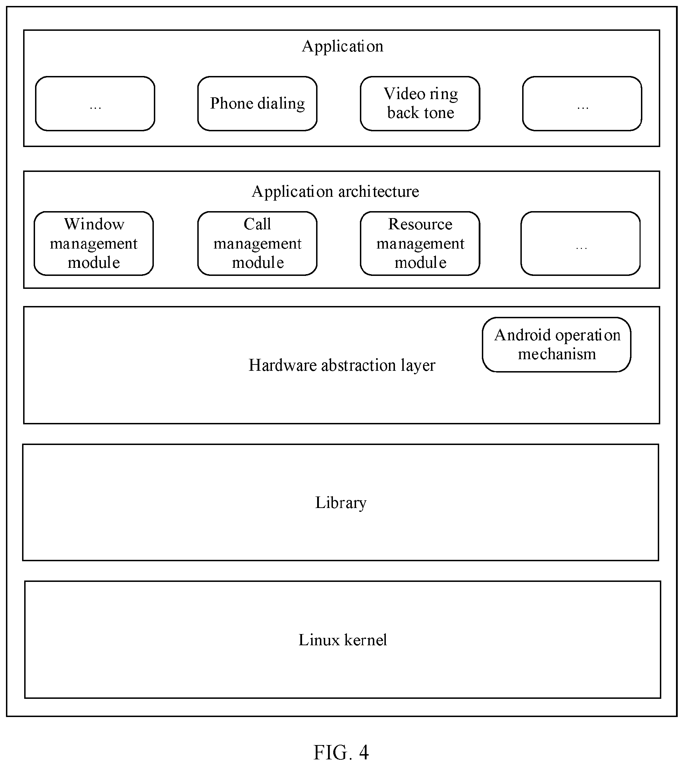

In embodiments of this application, the terminal is a device having a wireless transceiver function, and may be deployed on land, including an indoor or outdoor device, a hand-held device, or a vehicle-mounted device, may be deployed on water (for example, on a ship), or may be deployed in the air (for example, on an airplane, a balloon, or a satellite). Specifically, the terminal may be a terminal device (terminal device) that can access a mobile network, a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal may alternatively be a terminal device that can access a fixed network, for example, a wired telephone. The terminal may alternatively be a soft terminal corresponding to application software having a call function. FIG. 4 is a diagram of a system architecture of a terminal according to an embodiment of this application. Refer to FIG. 4. The terminal may include applications (applications), an application framework (application framework), a hardware abstraction layer (hardware abstraction layer, HAL), a library (library), and a linux kernel (linux kernel). The applications (applications) include a telephone dialing application (dialer), a video ring back tone application (video RBT), or the like. The phone dialing application has call and dialing functions. The video ring back tone application is a target application. The target application client is a video ring back tone application client. The application framework includes a window management module (window manager), a call management module (telephone manager), a resource management module (resource manager), or the like. The hardware abstraction layer is an interface layer between an operating system (linux) kernel and a hardware circuit, and is configured to abstract hardware. In embodiments of this application, the hardware abstraction layer is an interface layer of the operating system. The library stores files of an Android system application and a third-party application. By using the library, an application can invoke some functions of another application. For example, after initiating a call, the telephone dialing application invokes the video ring back tone application to obtain interaction data from an IT domain, and further optionally, obtains a color ring back tone from the IT domain. In an implementation process of embodiments of this application, the telephone dialing application and the video ring back tone application collaborate with each other, so that the interaction data can be displayed while a media resource is played.

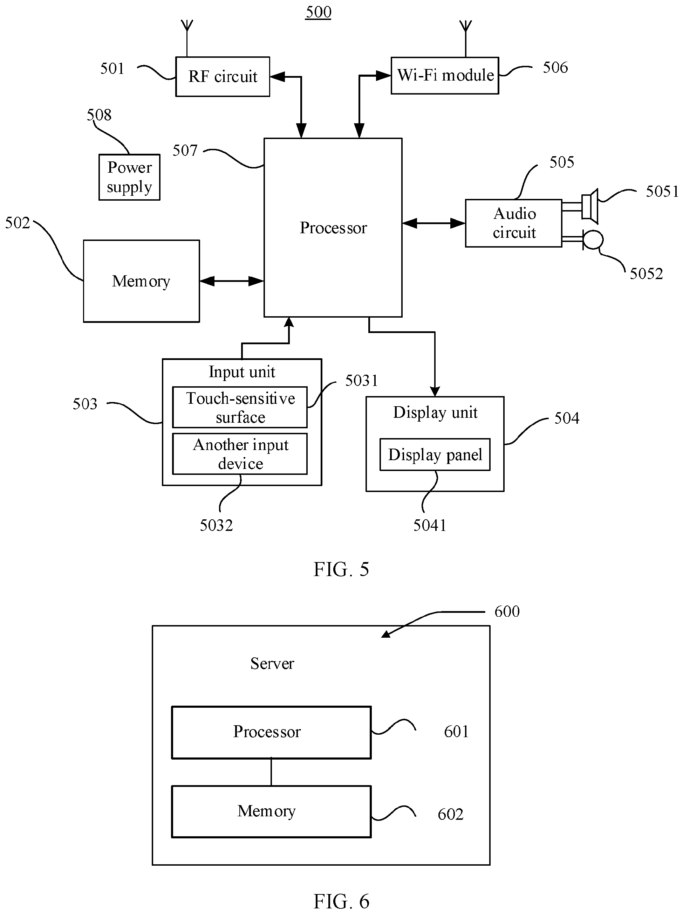

FIG. 5 is a schematic diagram of a structure of a terminal according to an embodiment of this application. The terminal may be configured to execute a media resource playing method on a calling terminal side in the following embodiments. Refer to FIG. 5. The terminal 500 includes:
components such as a radio frequency (radio frequency, RF) circuit 501, a memory 502 including one or more computer-readable storage media, an input unit 503, a display unit 504, an audio circuit 505, a wireless fidelity (wireless fidelity, Wi-Fi) module 506, a processor 507 including one or more processing cores, and a power supply 508. A person skilled in the art can understand that the structure of the terminal shown in FIG. 5 constitutes no limitation to the terminal, and the terminal may include components more or fewer than those shown in the figure, or include a combination of some components, or include components that are differently disposed. Specifically:

The RF circuit 501 may be configured to: receive and send signals during an information receiving and sending process or a call process, particularly, after receiving downlink information of a base station, deliver the downlink information of the base station to the one or more processors 507 for processing, and send related uplink data to the base station. Generally, the RF circuit 501 includes but is not limited to an antenna, at least one amplifier, a tuner, one or more oscillators, a subscriber identity module (SIM) card, a transceiver, a coupler, a low noise amplifier (low noise amplifier, LNA), a duplexer, and the like. In addition, the RF circuit 501 may communicate with a network and another device through wireless communication. The wireless communication may use any communication standard or protocol, including but not limited to a global system for mobile communications (global system for mobile communications, GSM), a general packet radio service (general packet radio service, GPRS), code division multiple access (code division multiple access, CDMA), wideband code division multiple access (wideband code division multiple access, WCDMA), long term evolution (long term evolution, LTE), an email, a short message service (short message service, SMS), and the like. The RF circuit 501 is configured to implement processes such as a call establishment process and a call process in embodiments of this application.

The memory 502 may be configured to store a software program and a software module. The processor 507 runs the software program and the software module stored in the memory 502 to execute various functional applications and data processing. The memory 502 may mainly include a program storage area and a data storage area. The program storage area may store an operating system, an application required for at least one function (such as a voice playing function and an image playing function), and the like; and the data storage area may store data (such as audio data and a phone book) created based on use of the terminal 500, and the like. In addition, the memory 502 may include a high-speed random access memory, and may also include a non-volatile memory such as at least one disk storage device, a flash memory device, or another volatile solid-state storage device. Correspondingly, the memory 502 may further include a memory controller, to enable the processor 507 and the input unit 503 to access the memory 502. The memory 502 is further configured to store at least one of display data of an interaction control, interaction content data, a second media resource, and a first media resource that are obtained by the terminal in embodiments of this application.

The input unit 503 may be configured to: receive input digital or character information, and produce signal input that is of a keyboard, a mouse, a joystick, optics, or a trackball and that relates to user setting and functional control. Specifically, the input unit 503 may include a touch-sensitive surface 5031 and another input device 5032. The touch-sensitive surface 5031, also referred to as a touch display screen or a touch panel, may collect touch operations of a user on or near the touch-sensitive surface 5031 (such as operations of a user on or near the touch-sensitive surface 5031 by using any suitable object or attachment such as a finger or a touch pen), and drive a corresponding connection apparatus according to a preset program. Optionally, the touch-sensitive surface 5031 may include two parts: a touch detection apparatus and a touch controller. The touch detection apparatus detects a touch orientation of the user, detects a signal generated by the touch operation, and transmits the signal to the touch controller. The touch controller receives touch information from the touch detection apparatus, converts the touch information into contact coordinates, then sends the contact coordinates to the processor 507, and can receive a command sent from the processor 507 and execute the command. In addition, the touch-sensitive surface 5031 may be implemented in a plurality of types, for example, a resistive type, a capacitive type, an infrared type, and a surface acoustic wave type. In addition to the touch-sensitive surface 5031, the input unit 503 may further include another input device 5032. Specifically, the another input device 5032 may include but is not limited to one or more of a physical keyboard, a function key (such as a volume control key or an on/off key), a trackball, a mouse, or a joystick. The input unit 503 is configured to receive a signal triggered by an operation performed by the user on the input unit 503, and transmits the signal to a corresponding controller based on the signal. For example, in embodiments of this application, the user can select a media resource for playing and perform an operation on an interaction control by performing a touch operation on the input unit 503.

The display unit 504 may be configured to display information input by the user or information provided for the user, and various graphic user interfaces of the terminal 500. The graphic user interfaces may include a graphic, a text, an icon, a video, and any combination thereof. The display unit 504 may include a display panel 5041. Optionally, the display panel 5041 may be configured in a form of a liquid crystal display (liquid crystal display, LCD), an organic light-emitting diode (organic light-emitting diode, OLED), or the like. Further, the touch-sensitive surface 5031 may cover the display panel 5041. When the touch operation on or near the touch-sensitive surface 5031 is detected, the touch-sensitive surface 5031 transfers the touch operation to the processor 507 to determine a type of a touch event, and then the processor 507 provides corresponding visual output on the display panel 5041 based on the type of the touch event. For example, the display unit 504 can display at least one of a user interface for playing the second media resource and a user interface for playing the first media resource. In FIG. 5, the touch-sensitive surface 5031 and the display panel 5041 serve as two separate components to implement input and output functions. However, in some embodiments, the touch-sensitive surface 5031 and the display panel 5041 may be integrated to implement the input and output functions.

The audio circuit 505, a loudspeaker 5051, and a microphone 5052 may provide an audio interface between the user and the terminal 500. The audio circuit 505 may transmit, to the loudspeaker 5051, an electrical signal that is obtained through conversion of received audio data, and the loudspeaker 5051 converts the electrical signal into an acoustic signal and outputs the acoustic signal. In addition, the microphone 5052 converts a collected acoustic signal into an electrical signal, the audio circuit 505 receives and converts the electrical signal into audio data, and outputs the audio data to the processor 507 for processing, and then processed audio data is sent to, for example, another terminal, by using the RF circuit 501, or the audio data is output to the memory 502 for further processing. The audio circuit 505 may further include an earplug jack, to provide communication between a peripheral earphone and the terminal 500. In embodiments of this application, the audio circuit 505 and the loudspeaker 5051 can implement an audio playing related process on a terminal side. For example, when any media resource is played, the terminal processes and plays audio data through the audio circuit 505 and the loudspeaker 5051.

Wi-Fi is a short-range wireless transmission technology. By using the Wi-Fi module 506, the terminal 500 may help the user receive and send emails, browse web pages, access streaming media, and the like. The Wi-Fi module 506 provides wireless broadband Internet access for the user. Although FIG. 5 shows the Wi-Fi module 506, it can be understood that the Wi-Fi module 506 is not a necessary constituent of the terminal 500, and may be omitted as required without changing the essence scope of the present invention.

The processor 507 is a control center of the terminal 500, connects to, through various interfaces and cables, various parts of an entire mobile phone, and executes, by running or executing the software program and/or the software module that are/is stored in the memory 502 and by invoking data stored in the memory 502, various functions of the terminal 500 and data processing, to perform overall monitoring on the mobile phone. Optionally, the processor 507 may include one or more processing cores. Optionally, an application processor and a modem processor may be integrated into the processor 507. The application processor mainly processes an operating system, a user interface, an application, and the like. The modem processor mainly processes wireless communication. It may be understood that the foregoing modem processor may be not integrated into the processor 507.

The terminal 500 further includes the power supply 508 (such as a battery) that supplies power to the parts. Optionally, the power supply may be logically connected to the processor 507 by using a power management system, for implementing functions such as management of charging, discharging, and power consumption by using the power supply management system. The power supply 508 may further include one or more of a direct current or alternate current power supply, a re-charging system, a power supply fault detection circuit, a power supply converter or an inverter, a power supply state indicator, and any other components. Although not shown in the figure, the terminal 500 may further include a camera, a Bluetooth module, and the like, and details are not described herein.

FIG. 6 is a schematic diagram of a structure of a server according to an embodiment of this application. The server 600 may vary greatly due to different configurations or performance, and may include one or more processors 601 and one or more memories 602. The memory 602 stores at least one piece of program code. The at least one piece of program code is loaded and executed by the processor 601 to implement the media resource playing method performed by the second media server in each of the foregoing method embodiments. Certainly, the server 600 may further include components such as a wired or wireless network interface, a keyboard, and an input/output interface, to facilitate input and output. The server 600 may further include another component for implementing functions of a device. Details are not described herein. The processor may be any processor such as a central processing unit (central processing unit, CPU), a graphics processing unit (graphics processing unit, GPU), a tensor processing unit (tensor processing unit, TPU), a neural network processing unit (neural network processing unit, NPU), a brain processing unit (brain processing unit, BPU), a deep learning processing unit (deep learning processing unit, DPU), a holographic image processing unit (holographic processing unit, HPU), a vector processing unit (vector processing unit, VPU), or an intelligent processing unit (intelligence processing unit, IPU).

The processor 601 may be a general-purpose CPU, a microprocessor, an application-specific integrated circuit (application-specific integrated circuit, ASIC), a GPU, or one or more integrated circuits, and is configured to execute a related program to implement the foregoing media resource playing method.

The processor 601 may be an integrated circuit chip and capable of signal processing. In an implementation process, steps in the media resource playing method in this application may be implemented by using a hardware integrated logical circuit in the processor 601, or by using program code in a form of software. The foregoing processor 601 may be a general-purpose processor, a digital signal processor (digital signal processor, DSP), an ASIC, a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor, or the like. Steps of the methods disclosed with reference to embodiments of this application may be directly executed and accomplished by using a hardware decoding processor, or may be executed and accomplished by using a combination of hardware and software modules in the decoding processor. The software module may be in a mature storage medium in the art, such as a random access memory (random access memory, RAM), a flash memory, a read-only memory (read-only memory, ROM), a programmable read-only memory, an electrically erasable programmable memory, a register, or the like. The storage medium is in the memory 602. The processor 601 reads information in the memory 602, and completes, in combination with hardware of the processor 601, a function that needs to be performed by a module included in a second media server in embodiments of this application, or performs the media resource playing method on the second media server side in the method embodiments of this application.

It can be noted that names of various requests in embodiments of this application do not limit functions of the requests, and the names of the various requests may be changed based on a protocol or the like.

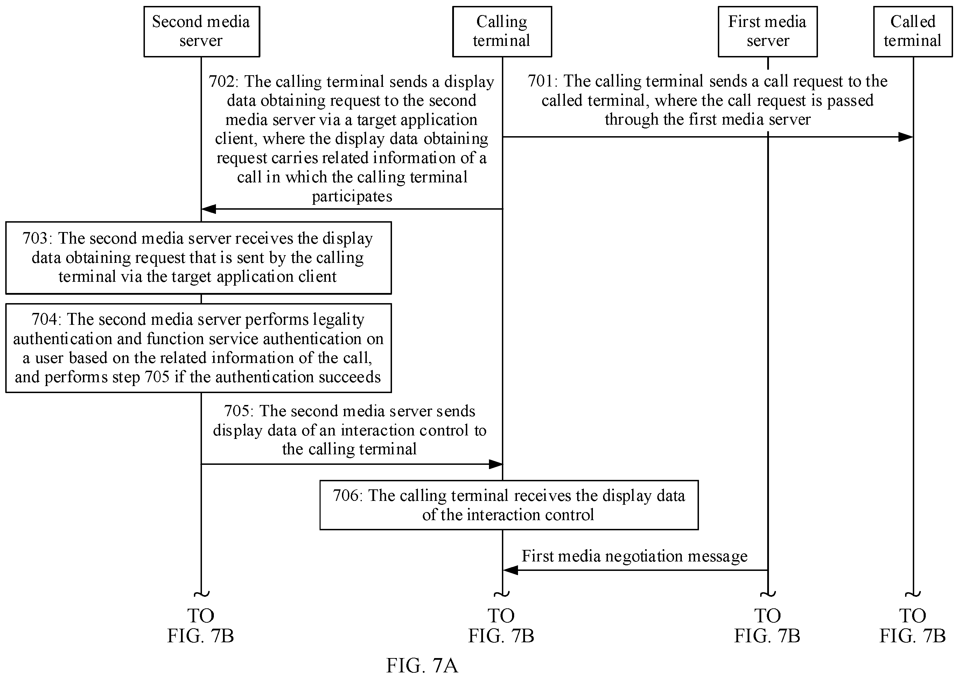

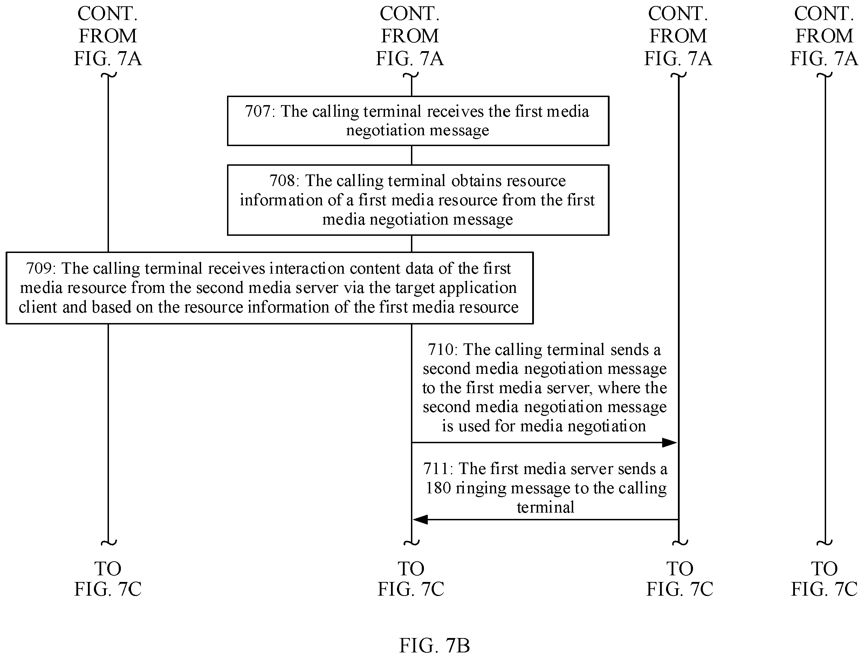

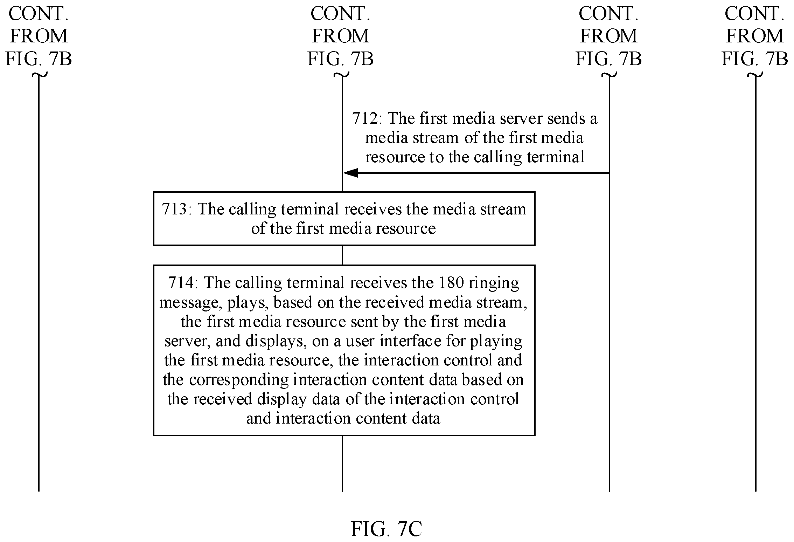

In the foregoing embodiments, the system architecture and the related structure such as hardware are described. The method in embodiments of this application is used in the system architecture shown in FIG. 1 or FIG. 3, and certainly may also be applied in another communication scenario. This is not limited in embodiments of this application. The following describes solutions of this application with reference to specific embodiments. FIG. 7A and FIG. 7B and FIG. 7C are a flowchart of a media resource playing method according to an embodiment of this application. The procedure is: if a media resource in a CT domain exists in a current call process, playing the media resource in the CT domain, and displaying interaction data in an IT domain on a user interface for playing the media resource in the CT domain. Display data of an interaction control and interaction data are obtained in batches. FIG. 7A and FIG. 7B and FIG. 7C include the following steps.

701: A calling terminal sends a call request to a called terminal, where the call request is passed through a first media server.

The call request is a video call request or an audio call request. The first media server is a server in a communication technology CT domain.

In a possible implementation, when initiating a call to the called terminal, the calling terminal sends the call request to the called terminal by using a telephone dialing application of the calling terminal. It can be understood that the call request is transparently transmitted to the called terminal via a network device in the CT domain, and the call request is passed through the first media server in the CT domain.

702: The calling terminal sends a display data obtaining request to a second media server via a target application client, where the display data obtaining request carries related information of the call in which the calling terminal participates.

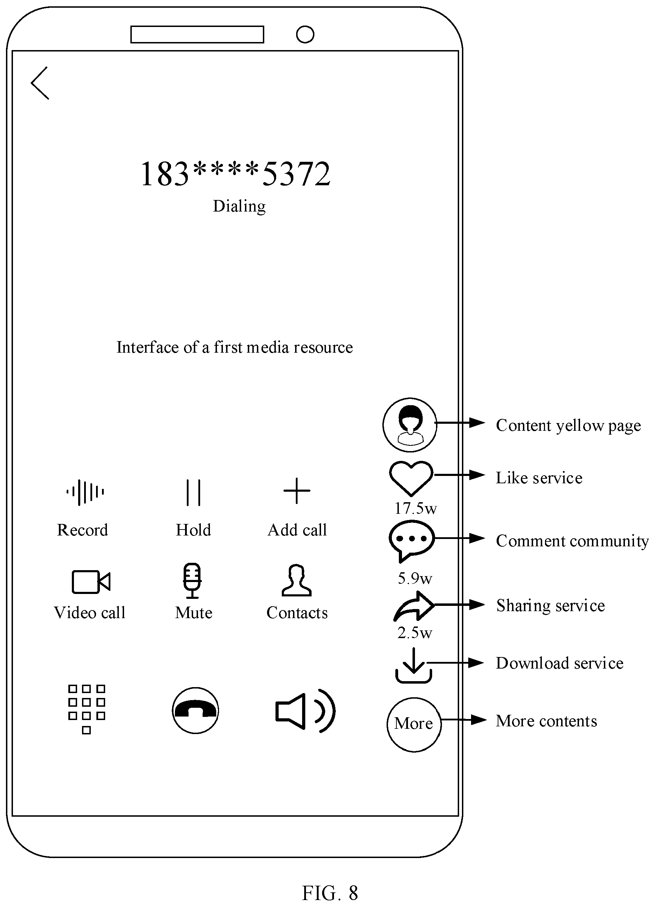

The target application client is an application client, for example, a video ring back tone application client, that has a function of playing a media resource in a ringing phase, and the target application client has a built-in media player. The second media server is a server in an Internet technology IT domain. The display data obtaining request indicates to obtain display data of an interaction control. Optionally, the related information of the call includes a calling number, a called number, location information of the calling party, a call type, and/or call time. It can be noted that, in this embodiment, the display data obtaining request represents a request for obtaining the display data in the IT domain. A name of the display data obtaining request is not limited in this embodiment of this application. The interaction control includes at least one of the following: an access control on homepage (also referred to as a content yellow page control), a like control, a comment control, a sharing control, and a download control. The display data of the interaction control is rendering data of the interaction control. For example, FIG. 8 is a schematic diagram of media resource playing according to an embodiment of this application. A play page in FIG. 8 displays a plurality of interaction controls such as a content yellow page control, a like control, a comment control, a sharing control, a download control, and a more content control. It can be understood that, in step 702, the media resource has not started to be played, and FIG. 8 is used as an example herein to explain rendering of the plurality of interaction controls.

In a possible implementation, after sending the call request to the called terminal, the calling terminal starts a target application client (which may also be referred to as opening a target application client), and a telephone dialing application of the calling terminal sends related information of the call to the target application client. After receiving the related information of the call, the target application client sends, to the second media server and in the IT domain, a display data obtaining request that carries the related information. The display data obtaining request is sent by using an HTTP protocol or an HTTPS protocol.

703: The second media server receives the display data obtaining request that is sent by the calling terminal via the target application client.

In a possible implementation, after receiving the display data obtaining request that is sent by the calling terminal via the target application client, the second media server reads the related information of the call from a corresponding field of the display data obtaining request.

704: The second media server performs legality authentication and function service authentication on a user based on the related information of a call, and performs step 705 if the authentication succeeds.

In this embodiment of this application, the authentication includes authentication on user function information (also referred to as validity authentication). Optionally, the authentication further includes authentication on user identity information. User function information authentication is to check whether a user enables the function of displaying interaction controls. User identity information authentication is verification on an identity of a user, for example, verification on a called phone number to check whether the phone number is a valid phone number. Optionally, authentication on the user is authentication on at least one of a calling user and a called user.

In a possible implementation, by using the authentication on the calling number as an example, a corresponding authentication process includes: After obtaining information carried in the display data obtaining request, the second media server determines whether the calling number is a valid number based on the calling number in the information; if the calling number is a valid number, performs query in a subscription database; if it is found that the calling number has subscribed to a display interaction control function, the user authentication succeeds; and performs the subsequent step 705. Alternatively, if the calling number is not found, the user authentication fails. A process of authentication on the called party is similar to the foregoing process.

Optionally, the second media server further records related information of the call, and the related information of the call may be used as a data reference for subsequent operation.

In the foregoing process, the user is authenticated to verify at least one of legality and validity of the user, to ensure secure display of the interaction control during subsequent media resource playing, so that security and reliability of display of the interaction control in the IT domain are improved.

It can be noted that, after the second media server authenticates the user successfully, the second media server establishes a session connection with the calling terminal. The session connection is based on an HTTP protocol or an HTTPS protocol, so that in a subsequent process, the second media server exchanges resource related information and the like with the calling terminal by using the session connection.

705: The second media server sends the display data of the interaction control to the calling terminal.

The second media server or a database associated with the second media server stores the display data of the interaction control. The display data is rendering data, and indicates a display form of the interaction control. The terminal can perform rendering based on the display data to display the interaction control. For example, default display data includes default overlaid styles of an access control on homepage, a like control, a comment control, a sharing control, and a download control.

In a possible implementation, in response to the display data obtaining request, the second media server obtains the display data of the interaction control from the server or the associated database, and sends the display data of the interaction control to the terminal. Optionally, the second media server can implement fast transmission of the display data in a form of a data packet, so that efficiency of obtaining the display data by the calling terminal is improved.

In another possible implementation, the target application client may further provide a plurality of overlaid styles for the user, and the user can select, via the target application client, an overlaid style that the user wants. In this way, the second media server can determine, based on setting information of the calling terminal, an overlaid style preset by the user, further query the server or a subscribed database, obtain display data of the interaction control corresponding to the overlaid style, and send the display data of the interaction control to the terminal. In this way, a customized display effect is achieved.

The foregoing steps 702 to 705 are a process of obtaining the display data of the interaction control after the calling terminal initiates the call. In the foregoing process, the display data of the interaction control can be obtained in advance. Therefore, when the first media resource is subsequently played, the display data of the interaction control does not need to be obtained from the second media server. This reduces an amount of obtained data and a display delay.

In this embodiment of this application, an example in which the second media server pushes the display data of the interaction control to the calling terminal is used for description. In a possible implementation, the calling terminal interacts with the second media server for a plurality of times to obtain the display data of the interaction control. For example, the second media server sends address information of the display data of the interaction control to the calling terminal in response to the display data obtaining request. The address information is a uniform resource locator (uniform resource locator, URL) address of the displayed data, and the URL address is also referred to as a web page address. The calling terminal receives the address information of the display data of the interaction control, and obtains the display data of the interaction control from the second media server based on the received address information. Optionally, in this process, after determining the address information of the display data of the interaction control, the second media server preloads the display data of the interaction control. By using the preloading method, the problem of delayed display of the interaction control can be mitigated, and efficiency for obtaining the display data is improved. In this way, a problem of delayed display of the control does not occur subsequently when a media resource is played.

Optionally, a method in which the second media server preloads the display data of the interaction control includes any one of the following implementations.

In a possible implementation, the display data of the interaction control is stored in a hard disk of the second media server. After determining the address information of the display data of the interaction control, the second media server preloads the display data of the interaction control from the hard disk of the second media server to a memory or a cache.

In another possible implementation, the display data of the interaction control is stored in a hard disk or a memory of a server other than the second media server. After determining the address information of the display data of the interaction control, the second media server preloads the display data of the interaction control from the hard disk or the memory of the another server to a memory or a cache of the second media server.

In still another possible implementation, the display data of the interaction control is stored in an interaction database. After determining the address information of the display data of the interaction control, the second media server preloads the display data of the interaction control from the interaction database to a memory or a cache of the second media server.

The interaction database may be a database associated with the second media server, or may be a database associated with another server. The database is not limited in this embodiment of this application.

It can be understood that the foregoing three implementations correspond to different preloading processes based on different storage locations of the display data of the interaction control. If the second media server loads the data when the calling terminal obtains the display data of the interaction control, a specific delay is caused. However, by using the foregoing preloading method, the problem of delayed display of the interaction control can be mitigated, and efficiency for obtaining the display data is improved. In this way, a problem of delayed display of the control does not occur subsequently when a media resource is played.

706: The calling terminal receives the display data of the interaction control.

Optionally, the display data of the interaction control is in a form of a data packet. After receiving the data packet, the calling terminal obtains the display data of the interaction control by parsing the data packet.

707: The calling terminal receives a first media negotiation message sent by the first media server, where the first media negotiation message is used for media negotiation.

The first media negotiation message is used for media negotiation between the first media server and the calling terminal, and the first media server is in the CT domain. Optionally, the first media negotiation message is an update message, and the first media negotiation message carries media capability information of the first media server. In other words, the first media negotiation message is a SIP message that carries SDP information of the first media server. Specifically, a header field of the first media negotiation message carries early media information, for example, P-Early-Media: SDP, and/or the SDP information of the first media negotiation message carries a=contengt:g.3gpp.cat media attribute, to indicate that the first media negotiation message is used for early media negotiation between the first media server and the calling terminal. If the calling terminal receives the first media negotiation message, the calling terminal determines that a media resource to be played in the CT domain exists in the current call, and continues to perform subsequent steps.

708: The calling terminal obtains resource information of the first media resource from the first media negotiation message.

The first media resource is a media resource in the CT domain, for example, a media resource such as a video ring back tone, a video advertisement, or a video customer service. The resource information is any type of information, for example, a resource ID (identification, identification number) of the first media resource, that indicates the first media resource. Optionally, the resource information further indicates carrier information (a carrier identifier) of the first media resource.

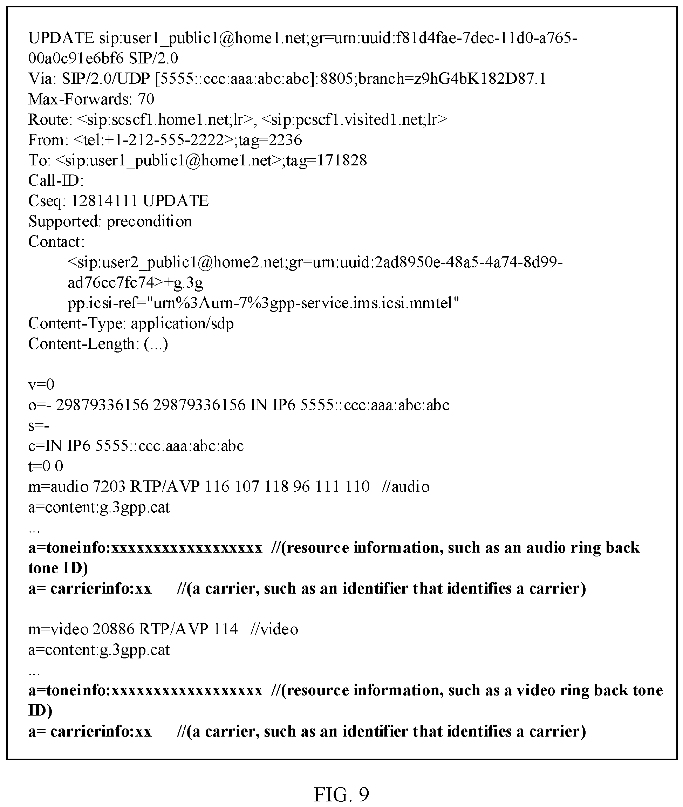

In a possible implementation, the resource information of the first media resource is obtained from a first media negotiation message sent by the first media server. Optionally, the first media negotiation message is an update message, and the resource information is included in session description protocol SDP information of the update message. For example, FIG. 9 is a schematic diagram of an update message carrying resource information according to an embodiment of this application. As shown in FIG. 9, the SDP information in the update message carries the resource information. Optionally, the resource information includes video information and audio information of the media resource. Refer to FIG. 9. An audio ring back tone ID is carried in m=audio content of the SDP information, and a video ring back tone ID is carried in m=video content of the SDP information. In addition, in m=audio content and m=video content in FIG. 9, a field a=carrierinfo:xx may be further added to carry a carrier ID. For example, 01 represents a carrier A, 02 represents a carrier B, and 03 represents a carrier C.

709: The calling terminal receives interaction content data of the first media resource from the second media server via the target application client and based on the resource information of the first media resource.

In this embodiment of this application, the interaction content data is used for displaying interaction content based on the first media resource. The interaction content data includes at least one of the following: access data on homepage, like data, comment data, shared data, and downloaded. As shown in FIG. 8, FIG. 8 shows like data of 1.745 million, comment data of 59 thousand, and shared data of 25 thousand. It can be understood that the interaction content data further includes related data of each interaction control. For example, for a like control, corresponding related data is like data, and the like data includes a like account, a like account avatar, and the like; for a comment control, corresponding related data is comment data, and the comment data includes a comment account, comment content, and the like; for a download control, corresponding related data is downloaded data, and the downloaded data includes a download service link. Optionally, the interaction content data is on-screen comment data, animation special effect data, or the like. Therefore, an on-screen comment or an animation effect is displayed on the user interface for playing the first media resource for the calling terminal, supplementing an interactive display effect in the CT domain and improving interest. The interaction data further includes links of other media resources for the user to select.

In another possible implementation, the calling terminal sends an interaction data obtaining request to the second media server via the target application client, where the interaction data obtaining request carries the resource information of the first media resource. After receiving the interaction data obtaining request sent by the calling terminal via the target application client, the second media server determines the interaction content data of the first media resource based on the resource information. For example, the second media server reads the resource information of the first media resource from a corresponding field in the interaction data obtaining request, and obtains, through querying, the interaction content data of the first media resource based on the resource information. The second media server returns the interaction content data to the calling terminal, so that the calling terminal receives the interaction content data. In another possible implementation, a process in which the calling terminal interacts with the second media server to obtain the interaction content data is performed based on address information of the interaction content data. For this process, refer to the foregoing process descriptions of the display data of the interaction control.

It can be noted that, in this embodiment of this application, that the interaction data is the interaction content data is used as an example. The foregoing step 701 to step 709 are a process in which the display data of the interaction control is first obtained, and then the interaction content data is obtained. In the foregoing process, the display data of the interaction control can be obtained in advance, and then the interaction content data is obtained. Therefore, when the first media resource is subsequently played, the display data of the interaction control does not need to be obtained from the second media server. This reduces an amount of obtained data and a display delay.

In another possible implementation, the interaction data includes interaction content data and display data of the interaction control. After step 701, step 709 is performed. The interaction content data of the first media resource and the display data of the interaction control are obtained from the second media server based on the resource information of the first media resource, so that the interaction data including the interaction content data and the display data of the interaction control can be obtained at one time, and step 702 to step 706 do not need to be performed. In other words, steps 702 to 709 are replaced with the following process: The calling terminal determines the resource information of the first media resource provided by the first media server (for this process, refer to steps 707 and 708). The calling terminal receives the interaction content data of the first media resource and the display data of the interaction control from the second media server via the target application client and based on the resource information of the first media resource.

710: The calling terminal sends a second media negotiation message to the first media server, where the second media negotiation message is used for media negotiation.

Optionally, the second media negotiation message is a 200OK (UPDATE) message, and the 200OK (UPDATE) message carries media capability information of the calling terminal, to be specific, a media negotiation result between the calling terminal and the second media server.

It can be noted that, an execution sequence of step 709 and step 710 is not limited by the current sequence number. The execution sequence of the two steps may be that 709 and 710 are executed synchronously, or 710 and subsequent steps are executed first, and then 709 is executed. In other words, the process of obtaining the interactive content data in the IT domain and the process of media negotiation in the CT domain do not interfere with each other.

It can be noted that, the foregoing steps 707 and 710 briefly describe a media negotiation process between the calling terminal and the first media server. The following describes the foregoing media negotiation process by using an example process: The first media server sends a first media negotiation message to the calling terminal, where the first media negotiation message carries media capability information of the first media server. For example, the first media negotiation message is an update message or an 18* message. After receiving the first media negotiation message, the calling terminal determines a media negotiation result based on a capability of the calling terminal, and sends a second media negotiation message to the first media server, where the second media negotiation message carries the media negotiation result, and may also be referred to as media capability information of the calling terminal. For example, the second media negotiation message is a 200OK message.

711: The first media server sends a 180 ringing message to the calling terminal.

The ringing message is a 180 ringing message based on a SIP protocol, and the ringing message indicates that the called terminal rings.

712: The first media server sends a media stream of the first media resource to the calling terminal.

The first media server sends the media stream (for example, an RTP stream) of the first media resource to the calling terminal based on the media negotiation result. In this process, the calling terminal does not actively obtain the first media resource, but the first media server pushes the media stream.

713: The calling terminal receives the media stream of the first media resource.

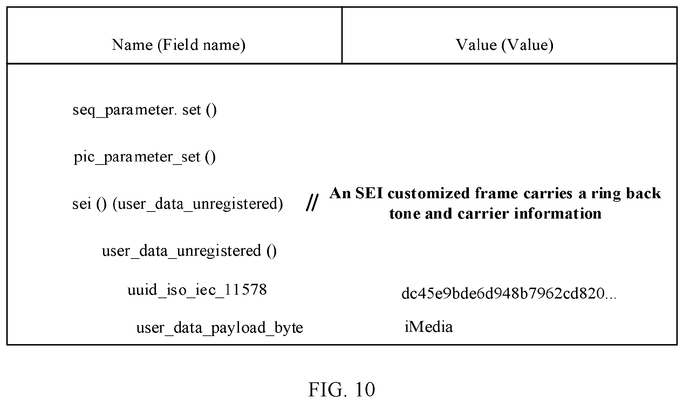

In this embodiment of this application, an example in which the resource information is obtained from the first media negotiation message in step 708 is used for description. In another possible implementation, the calling terminal obtains the resource information by using the media stream. In other words, the calling terminal receives the media stream of the first media resource, and obtains, from a header of the media stream of the first media resource transmitted by the first media server, the resource information carried in the first media resource. Optionally, the resource information is included in supplemental enhancement information (supplemental enhancement information, SEI) of the header of the media stream. For example, FIG. 10 is a schematic diagram of a media stream carrying resource information according to an embodiment of this application. As shown in FIG. 10, a ring back tone (ID) is carried in a self-defined frame of the SEI. Optionally, the self-defined frame of the SEI further carries carrier information.

In the foregoing process, two manners of carrying the resource information are provided. The resource information is carried in the first media negotiation message or the media stream, so that the calling terminal obtains the resource information, and subsequent normal display of the interaction data is ensured. In addition, in an implementation process, the resource information may be carried in either the first media negotiation message or the media stream, or the resource information may be carried in both the first media negotiation message and the media stream. In this way, when the resource information of one of the first media negotiation message or the media stream fails to be read, the resource information of the other is read, and the resource information can also be obtained, which can ensure that the resource information is obtained.

714: The calling terminal receives the 180 ringing message, plays, based on the received media stream, the first media resource sent by the first media server, and displays, on the user interface for playing the first media resource, the interaction control and the corresponding interaction content data based on the received display data of the interaction control and interaction content data.

In a possible implementation, the calling terminal displays the interaction control and the corresponding interaction content data in an overlay manner on the user interface for playing the first media resource. For example, the target application client renders an interaction layer on the user interface based on the display data of the interaction control and the interaction content data. The interaction layer includes the interaction control and the corresponding interaction content data, for example, information about a like control and a like quantity.

In the technical solution provided in this embodiment of this application, supplement is provided for media resources in the CT domain. When the first media resource in the CT domain exists, the interaction data of the first media resource is obtained by using the second media server in the IT domain, so that the calling terminal can display the interaction control and corresponding content data such as an interactive button, on-screen comments, and an animation effect on a layer overlaid on a screen of the calling terminal while playing the first media resource. This implements media interaction in a color ring back tone scenario, enriches experience of color ring back tone users, and improves interest of a video ring back tone service. With the development and commercial use of 5G, in the background that IT network resources are not bottleneck and a network delay is shorter, the video ring back tone service can be extended more flexibly, for example, video playing is supported among stacked layers, an interaction function is provided on a video page, and rolling switching between video content is supported, to improve interest of the video ring back tone service.

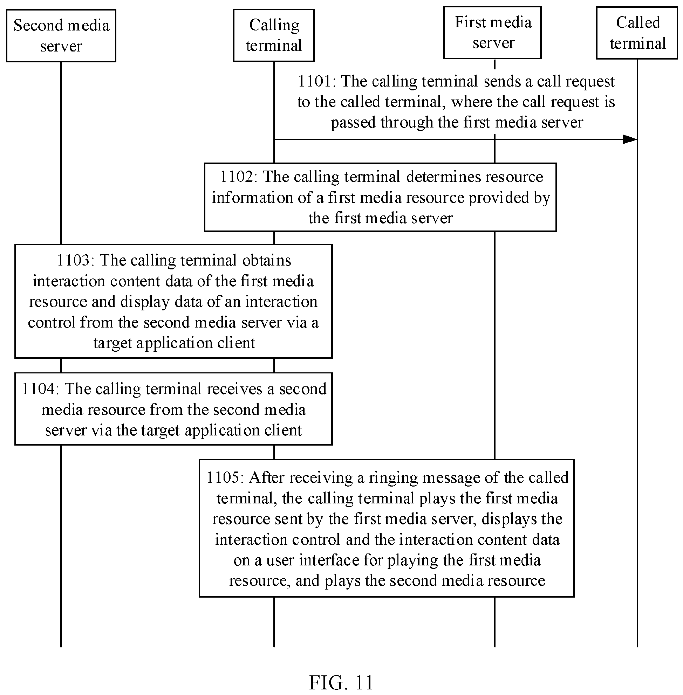

The embodiment shown in FIG. 7A and FIG. 7B and FIG. 7C is described by using an example in which a media resource in the CT domain is played and an overlay layer is added on the user interface to display interaction-related data. For a calling terminal, a media resource in the IT domain and a media resource in the CT domain may be played at the same time. The following describes the media resource playing method with reference to a process shown in FIG. 11. Refer to FIG. 11. The process includes the following steps.

1101: A calling terminal sends a call request to a called terminal, where the call request is passed through a first media server.

For step 1101, refer to step 701.

1102: The calling terminal determines resource information of a first media resource provided by the first media server.

For step 1102, refer to step 708 or 713.

1103: The calling terminal obtains interaction content data of the first media resource and display data of an interaction control from a second media server via a target application client.

For a process of step 1103, refer to the process of obtaining the interaction content data of the first media resource and the display data of the interaction control in the embodiment shown in FIG. 7A and FIG. 7B and FIG. 7C.

1104: The calling terminal receives a second media resource from the second media server via the target application client.

The second media server is a server in the IT domain, and the second media resource is a media resource in the IT domain. In this embodiment, the second media resource is a pushed video advertisement, a video animation, and the like. This embodiment can implement playing of an IT domain video in a ringing phase, to enrich watching experience of a video ring back tone user.

Optionally, the calling terminal sends a resource obtaining request via the target application client. After receiving the resource obtaining request, the second media server sends the second media resource to the calling terminal. For example, the second media server sends a media stream of the second media resource to the calling terminal in a form of an RTMP stream. In this process, the calling terminal does not obtain the media stream based on address information. Instead, the second media server actively pushes the media stream. Optionally, the second media server can provide a plurality of second media resources for the user, and the user can select, via the target application client, a second media resource that the user wants to play.

Optionally, the second media server sends a preset second media resource to the calling terminal, to implement an operation objective such as advertisement push.

In step 1104, the calling terminal sends related information of the call to the second media server via the target application client. The second media server receives the related information, and performs authentication on the related information, for example, authentication on at least one of a calling number and a called number in the related information. For another example, the authentication includes the validity authentication and the function service authentication in step 704. After the authentication succeeds, the second media server determines the address information of the second media resource (for example, a second media resource that matches the related information), and sends the address information of the second media resource to the calling terminal. After receiving the address information of the second media resource, the calling terminal optionally obtains the second media resource from the second media server based on the address information of the second media resource, or obtains the second media resource after receiving a ringing message in step 1105. Optionally, after determining the address information of the second media resource, the second media server preloads the second media resource. Optionally, after receiving a session end message sent by the calling terminal, the second media server releases a preloaded second media resource, to save memory space.

Optionally, the calling terminal further obtains interaction content data of the second media resource from the second media server via the target application client. For example, an obtaining process includes: After determining the second media resource, the second media server determines the interaction content data corresponding to the second media resource, and sends address information of the interaction content data corresponding to the second media resource to the calling terminal. After receiving the address information of the interaction content data corresponding to the second media resource, the calling terminal optionally obtains the interaction content data of the second media resource from the second media server based on the address information of the interaction content data corresponding to the second media resource, or obtains the interaction content data of the second media resource after receiving a ringing message in step 1105. Optionally, after determining the address information of the interaction content data corresponding to the second media resource, the second media server preloads the interaction content data of the second media resource. Optionally, after receiving the session end message sent by the calling terminal, the second media server releases interaction content data of a preloaded second media resource, to save memory space. Optionally, the calling terminal further obtains display data of an interaction control of the second media resource from the second media server via the target application client. For this process, refer to the foregoing process of obtaining the interaction content data of the second media resource. It can be noted that, the calling terminal may not obtain the display data of the interaction control, but perform display based on the obtained display data of the interaction control.

1105: After receiving the ringing message of the called terminal, the calling terminal plays the first media resource sent by the first media server, displays the interaction control and the interaction content data on a user interface for playing the first media resource, and plays the second media resource.

For a process of obtaining and playing the first media resource, refer to the embodiment shown in FIG. 7A and FIG. 7B and FIG. 7C. Optionally, when the second media resource is played, the interaction control and the interaction content data of the second media resource are further displayed. For a display manner, refer to a display manner of the interaction control and the interaction content data of the first media resource.

Optionally, the playing the first media resource and the playing the second media resource are implemented by the calling terminal based on setting information. For example, if the setting information of the calling terminal indicates playing media resources in the IT domain and the CT domain, step 1105 is performed; if the setting information indicates playing a media resource in the CT domain, a related obtaining step may not be performed in the foregoing steps. In this manner, new experience and more customized selections are brought to the user, and experience and participation of the user in a video ring back tone service are improved.

Optionally, when playing the first media resource and the second media resource, the calling terminal may further use the following playing mode.

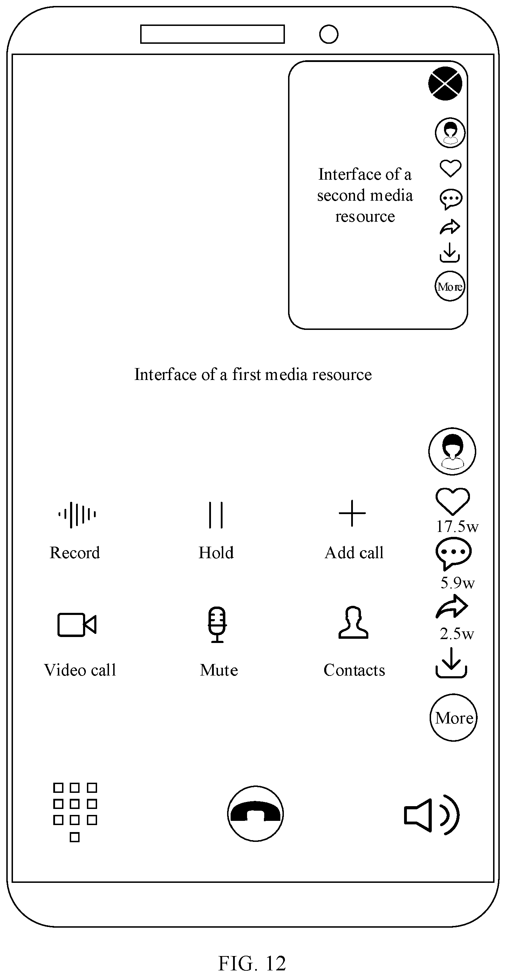

In a possible implementation, the calling terminal plays the media resource in the CT domain in full screen, and plays the media resource in the IT domain in a floating window. In other words, the first media resource is played in full screen, and the second media resource is played in a mute mode in a floating window on the user interface for playing the first media resource. For example, FIG. 12 is a schematic diagram of media resource playing according to an embodiment of this application. As shown in FIG. 12, an example in which the first media resource is played in full screen and the second media resource is played in the floating window is used in FIG. 12 to describe a solution. In another possible implementation, the calling terminal plays the media resource in the IT domain in full screen, and plays the media resource in the CT domain in a floating window. In other words, the second media resource is played in full screen, and the first media resource is played in a mute mode in a floating window on the user interface for playing the second media resource. In this implementation, one media resource is played in full screen, and the other media resource is played in a floating window, so that the two media resources can be clearly and intuitively displayed. In addition, in a manner of normal full-screen playing (with sound) and silent playing in the floating window, poor user experience caused by simultaneous playing two pieces of audio is avoided.

Optionally, in the scenario in which one of the two media resources is played in the floating window and the other is played in full screen, a process in which the calling terminal performs corresponding processing based on a click operation on the floating window includes any one of the following:

In a possible implementation, when detecting a click operation on the floating window, the calling terminal switches the media resource played in the floating window to a full-screen mode for playing, and closes the other media resource. In this process, in a process in which the calling user watches the media resource, the calling user may perform a click operation on a floating window corresponding to a media resource that the calling user is interested in, play the media resource in full screen, and close the other media resource, so that the media resource that the calling user wants to watch can be reserved, and better viewing experience can be brought to the calling user.

In another possible implementation, if the calling terminal detects a click operation on the floating window, the calling terminal switches the media resource played in the floating window to a full-screen mode for playing, and switches the other media resource to a floating window for playing. In this process, after the calling user performs a click operation on the floating window corresponding to the media resource that the calling user is interested in, the calling terminal plays the media resource in full screen, and switches the other media resource to the floating window, so that the user may further continue to switch to the other media resource for viewing.

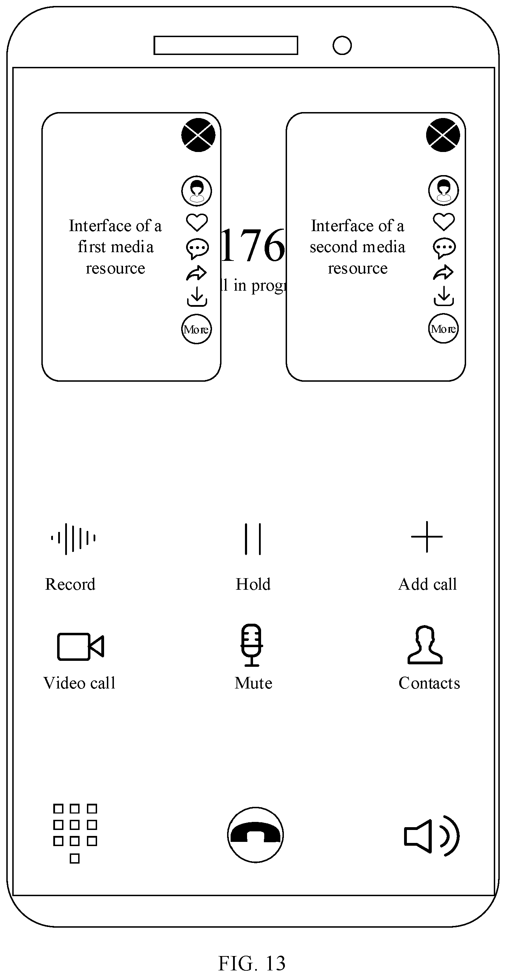

In another possible implementation, the calling terminal may further play the first media resource in the floating window, and play the second media resource in the floating window. For example, FIG. 13 is a schematic diagram of media resource playing according to an embodiment of this application. Refer to FIG. 13. The first media resource and the second media resource are separately played in different floating windows. In this implementation, the two media resources are separately played in the floating windows, and the two media resources can also be clearly and intuitively displayed. Optionally, at least one of the first media resource and the second media resource is played in a mute mode. In this process, because at least one media resource is played in the mute mode, auditory confusion caused by simultaneous playing two pieces of audio is also avoided, and user experience is improved. Optionally, playing the second media resource is implemented by using a player of a target application client (a video ring back tone application), and playing the first media resource is implemented by using a player of a system application (a telephone dialing application).

Optionally, in the scenario in which the two media resources are both played in the floating window, a process in which the calling terminal performs corresponding processing based on a click operation on the floating window includes any one of the following:

In a possible implementation, if the two media resources are both played in the floating window, when detecting a click operation on any floating window, the calling terminal switches the media resource played in the floating window to a full-screen mode for playing, and closes the other media resource. In this process, in a process in which the calling user watches the media resource, the calling user may perform a click operation on a floating window corresponding to a media resource that the calling user is interested in, play the media resource in full screen, and close the other media resource, so that the media resource that the calling user wants to watch can be reserved, and better viewing experience can be brought to the calling user.

In another possible implementation, if the calling terminal detects a click operation on the floating window, the calling terminal switches the media resource played in the floating window to a full-screen mode for playing, and maintains the other media resource in the floating window. In this process, after the calling user performs a click operation on the floating window corresponding to the media resource that the calling user is interested in, the calling terminal plays the media resource in full screen, and switches the other media resource to the floating window, so that an entrance for switching back to the other media resource is reserved for the user, and richer operation experience is provided.

It can be understood that, in the foregoing two implementations, the click operation on the floating window is a click operation on any location in the floating window except a close button. As shown in FIG. 12 or FIG. 13, a close button is disposed in each floating window, and the user can close, by performing a click operation on the close button, a media resource that the user does not want to continue playing, to achieve an objective of customized selection and playing. In other words, if the calling terminal detects a click operation on the close button in the floating window, the calling terminal closes the floating window.

In another possible implementation, the interaction control and the interaction content data corresponding to the media resource are displayed in an overlapping manner on a user interface for playing the media resource played in full screen, and a user interface for playing the other media resource is displayed in a floating window corresponding to the other media resource. In this process, only the interaction control and the interaction data corresponding to the media resource played in full screen are displayed in an overlay manner. In this way, cleanness and intuitiveness of a playing interface can be ensured, and an interaction operation of the user or terminal control is facilitated.

According to the technical solution provided in this application, by using interaction between the calling terminal and the first media server and the second media server, when a media resource in the CT domain and a media resource in the IT domain both exist, the media resource in the CT domain and the media resource in the IT domain can be simultaneously played, to bring new experience and more selectivity to the user, and improve experience and participation of the user in the video ring back tone service.

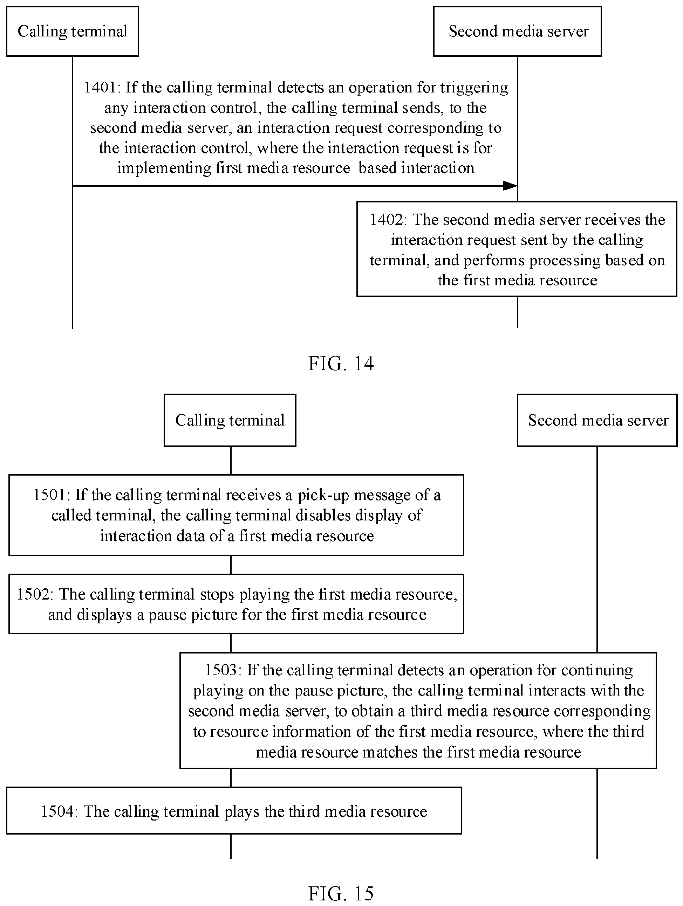

FIG. 7A and FIG. 7B and FIG. 7C and FIG. 11 describe playing of the media resources and displaying of the interactive control in the playing process. In addition, in a process of playing the media resource, a media resource-based interaction function may be further provided. FIG. 14 is a flowchart of an interaction method based on media resource playing according to an embodiment of this application. Refer to FIG. 14.

1401: If a calling terminal detects an operation for triggering any interaction control, the calling terminal sends, to a second media server, an interaction request corresponding to the interaction control, where the interaction request is for implementing interaction based on a first media resource.

The interaction request carries an interaction object and interaction content. The interaction object is interaction data corresponding to the interaction control, and the interaction content is updated content of the interaction object. For example, the interaction object is like data, and the interaction content is increasing the like data by one. The interaction request further carries resource information of the first media resource, so that the second media server processes, based on the resource information, interaction content corresponding to the first media resource.

1402: The second media server receives the interaction request sent by the calling terminal, and performs processing based on the first media resource.

In a possible implementation, after receiving the interaction request, the first media server determines, based on a resource identifier carried in the interaction request, the interaction object corresponding to the first media resource, and then performs processing based on the interaction content carried in the interaction request. For example, if the interaction object carried in the interaction request is like data, and the interaction content is increasing the like data by one, the second media server increases stored like data of the first media resource by one, and increases like data displayed on the calling terminal by one.

It can be noted that, in the procedure in FIG. 14, a type of a media transmit stream used between the calling terminal and the second media server is an HTML stream. The calling terminal sends an HTTP message or an HTTPS message to the second media server, and then the second media server returns an HTTP response or an HTTPS response to the calling terminal.

According to the technical solutions provided in this embodiment of this application, when a media resource is played in a ringing phase, an interaction control and interaction data are provided, so that media interaction in a color ring back tone scenario is implemented, interest of a video ring back tone service is increased, interest of playing the media resource can be greatly improved, interaction flexibility is higher, and interaction content is richer.

In the foregoing embodiment, playing and interaction functions based on the first media resource are described. In the playing process, processes such as playing and pausing of a call are further involved. The following provides descriptions based on the playing and pausing processing. Refer to FIG. 15. FIG. 15 describes the solution by using playing the first media resource as an example.

1501: If the calling terminal receives a pick-up message of the called terminal, the calling terminal disables display of interaction data of the first media resource.

The pick-up message indicates that the called terminal picks up the call, and a calling user and a called user start a conversation.

In a possible implementation, if the calling terminal receives the pick-up message and indicates, by using a telephone dialing application, a target application client to stop displaying an overlay layer of the interaction data, the target application client controls the player to stop displaying.

1502: The calling terminal stops playing the first media resource, and displays a pause picture for the first media resource.

The pause picture is a preset picture (for example, an entry picture of the target application client) or a media picture (for example, a screenshot picture) corresponding to a moment at which the playing pauses. In step 1502, the calling user can implement, by setting on the calling terminal, a function of retaining screen display of the first media resource during the call, that is, setting information of the calling terminal determines to retain a display state of the media resource during the call. In the foregoing embodiment, the screen display may still be retained during the call, to provide an entry for a further operation for the user and improve flexibility of media playing.

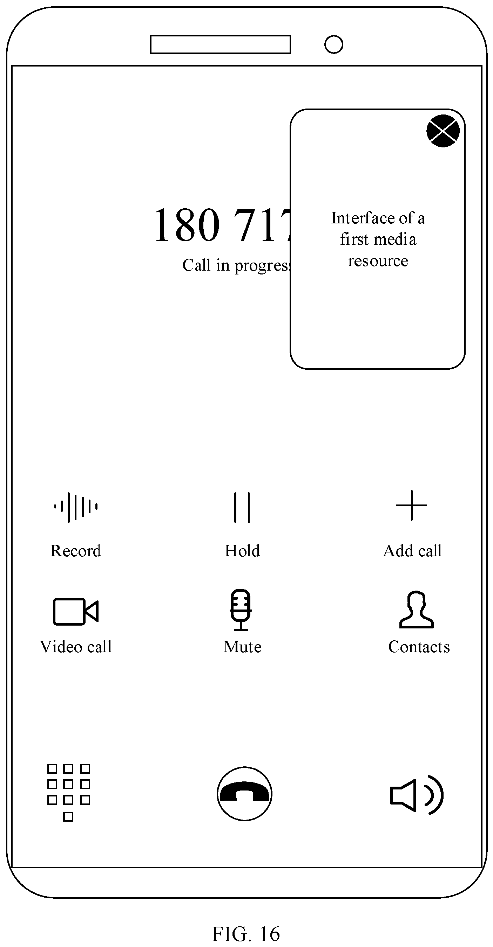

For example, FIG. 16 is a schematic diagram of media resource playing according to an embodiment of this application. Refer to FIG. 16. When a display state of the first media resource is retained during a call, the first media resource is displayed in a call window in a floating window.

Optionally, the calling terminal further supports setting of the display state after the call. A corresponding process is as follows.

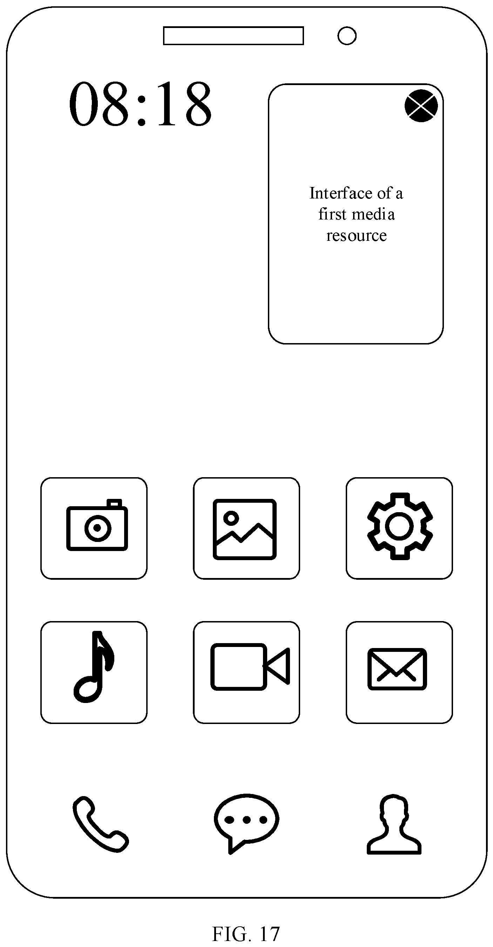

In a possible implementation, if it is determined, based on the setting information of the calling terminal, to retain the display state of the first media resource after the call, when the call ends, the pause picture for the first media resource is displayed on the main screen of the calling terminal in the floating window. FIG. 17 is a schematic diagram of media resource playing according to an embodiment of this application. Refer to FIG. 17. After the call, the first media resource is displayed on a home screen of the calling terminal in the floating window.

1503: If the calling terminal detects an operation for continuing playing on the pause picture, the calling terminal interacts with a second media server, to obtain a third media resource corresponding to the resource information of the first media resource, where the third media resource matches the first media resource.

That the third media resource matches the first media resource means that the third media resource is a media resource corresponding to the resource information (for example, a resource ID) of the first media resource. It can be understood that media content of the third media resource is the same as that of the first media resource.

In another possible implementation, the calling terminal sends a resource obtaining request to the second media server, where the resource obtaining request carries the resource information of the first media resource. The second media server receives the resource obtaining request sent by the calling terminal; and determines, based on the resource information, a third media resource corresponding to the resource information, where the third media resource matches the first media resource. The second media server returns address information of the third media resource to the calling terminal. After receiving the address information, the calling terminal obtains the third media resource from the second media server based on the address information. Optionally, after determining the address information of the third media resource, the second media server preloads the third media resource, to improve data transmission efficiency. For the preloading process, refer to the foregoing preloading process of the display data of the interaction control.

In the foregoing process, a session is established between the second media server and the calling terminal, so that interaction is performed based on the session.

1504: The calling terminal plays the third media resource.

In a possible implementation, after receiving the third media resource sent by the second media server, the calling terminal plays the third media resource. Optionally, the calling terminal plays the third media resource based on a playing progress when playing is stopped.

It can be noted that, the foregoing step 1503 and step 1504 are a process of triggering obtaining the third media resource based on the operation for continuing playing on the pause picture. If the calling user wants to continue watching the first media resource, the calling user may click the floating window to continue playing the first media resource, and the operation is convenient and simple.

In another optional implementation, the process of obtaining the third media resource may be executed after the calling terminal receives the pick-up message. In other words, during the call of the user, the second media server returns the address information of the third media resource, and the third media resource is obtained after the operation for continuing playing is detected. Through this process, the third media resource can be queried when the user answers the call, to prepare for subsequent playing of the third media resource, so that playing efficiency of the media resource is improved, and a problem that a long playing time occurs during subsequent playing of the media resource is avoided. Further, if it is detected that the pause picture is closed or the screen is turned off, the target application client is closed, and a session end message is sent to the second media server. After receiving the session end message of the calling terminal, the second media server releases the session with the calling terminal for the third media resource.

In another possible implementation, the pause picture is used as a portal website entrance of the target application client. If a click operation on the pause picture is detected, a portal website page is displayed on the started target application client. In other words, the target application client is started, and a portal website page corresponding to the target application client is displayed on the target application client. In the foregoing embodiment, if the calling user expects to access the portal website, the calling user may click the pause picture, and the operation is convenient and simple. Optionally, if the calling user wants to watch another media resource, the calling user browses the another media resource on the portal website page, and performs a click operation on the media resource that the calling user wants to watch, the calling terminal starts to play the media resource corresponding to the click operation. If the calling user wants to perform related service setting on the target application client, the calling user can also click a corresponding setting button on the portal website page to implement a corresponding function.

Optionally, the calling terminal plays the third media resource in different manners based on click operations on the pause picture at different moments. A corresponding process is as follows: In a possible implementation, if the calling terminal detects a click operation on the pause picture in a call process, the calling terminal plays the third media resource in a muted mode. In another possible implementation, if the calling terminal detects a click operation on the pause picture after the call, the calling terminal cancels the muted mode of the first media resource, and normally plays the third media resource.

In the foregoing process, a calling user may click the pause picture at any moment during the call or after the call, and can obtain a media resource with the same media content from the IT domain, so that continuous and complete audiovisual experience is provided. Further, the calling terminal can perform playing in different manners depending on whether the calling user performs the click operation during the call or after the call. The media resource is played in the mute mode during the call, so that the calling user can clearly hear content of the call, and important content of the call is avoided from being missed during the call. After the call, the media resource may be played normally, in other words, in a non-mute mode.

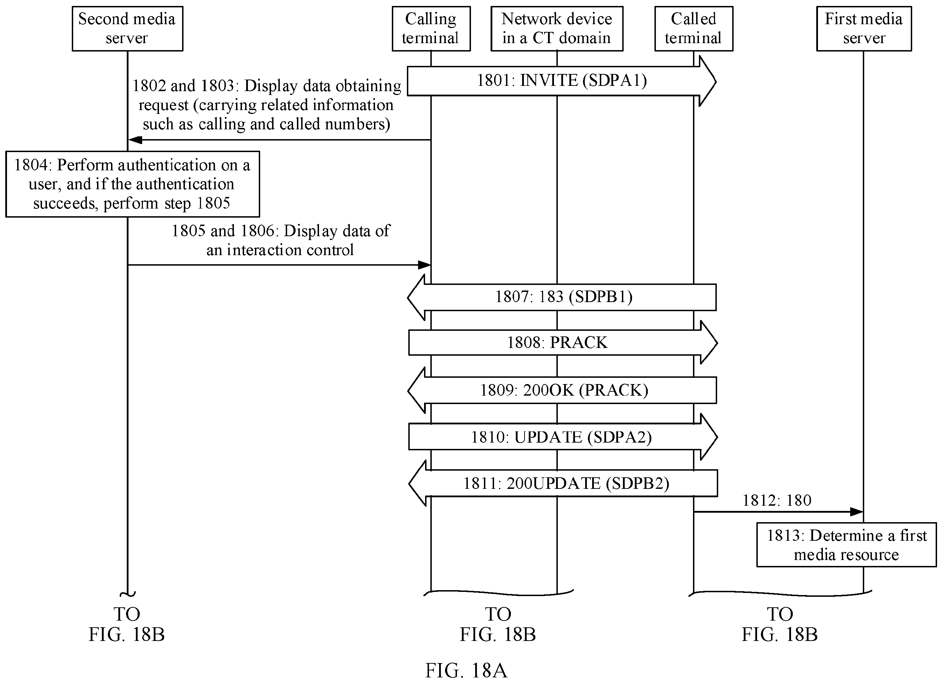

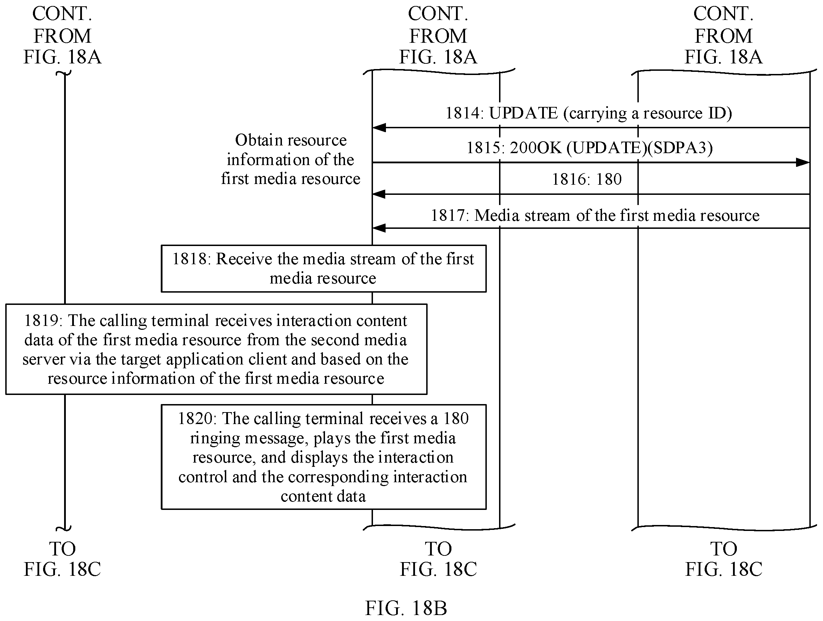

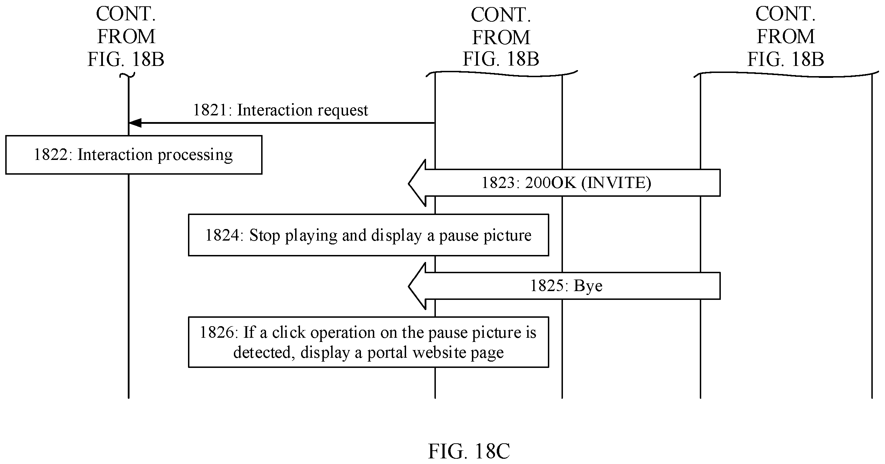

The following describes, with reference to signaling interaction in a VoLTE network, a process in which a media resource in a CT domain is played during the call to implement playing in a ringing phase, and a process in which an interaction interface is displayed based on interaction data in an IT domain. FIG. 18A and FIG. 18B and FIG. 18C are a flowchart of a media resource playing method according to an embodiment of this application. Refer to FIG. 18A and FIG. 18B and FIG. 18C.

1801: The calling terminal sends an INVITE message, where the INVITE message carries SDP information (for example, SDPA1 information) of the calling terminal.

1802: The calling terminal sends a display data obtaining request to a second media server via a target application client, where the display data obtaining request indicates to obtain display data of an interaction control.

1803: The second media server receives the display data obtaining request that is sent by the calling terminal via the target application client.

1804: The second media server performs legality authentication and function service authentication on a user based on related information of the call, and if the authentication succeeds, step 1805 is performed.

It can be noted that, during authentication, the second media server performs authentication based on a calling number and the like in the related information. A specific authentication method is as described in the foregoing embodiment, and details are not described herein again.

1805: The second media server sends the display data of the interaction control to the calling terminal.

For step 1805, refer to step 705.

1806: The calling terminal receives the display data of the interaction control.

It can be noted that the foregoing step of obtaining the display data of the interaction control is performed at any moment after the address information of the interaction control is obtained and before the calling terminal starts to play the first media resource, to implement obtaining of basic rendered content. For example, this step is performed before the interaction content data is obtained. For another example, this step is performed immediately after the calling terminal subsequently receives the 180 ringing message. This is not limited in this embodiment of this application.

1807: The called terminal receives the INVITE message, and sends a 183 message for a call request, where the 183 message carries SDP information (for example, SDPB1 information) of the called terminal.

It can be noted that, a time sequence between the step of receiving the INVITE message by the called terminal and the interaction of the calling terminal in the IT domain does not affect each other. In other words, for the calling terminal, after the INVITE message is sent to the called terminal, a process of obtaining the display data of the interaction control may be immediately performed. In another possible implementation, the calling terminal may perform the process of obtaining the display data of the interaction control at any moment before playing the media resource.

1808: The calling terminal receives the 183 message, and sends a PRACK message to the called terminal, where the PRACK message indicates that the calling terminal has received the 183 message sent by the called terminal.

1809: The called terminal receives the PRACK message, and sends a 200OK (PRACK) to the calling terminal, where the 200OK (PRACK) indicates that the called terminal has received the PRACK message sent by the calling terminal.

1810: The calling terminal receives the 200OK (PRACK), and sends an UPDATE message to the called terminal, where SDPA2 information carried in the UPDATE message indicates that the calling terminal successfully reserves the resource for the call.

1811: The called terminal receives the UPDATE message, and sends a 200UPDATE message to the calling terminal, where SDPB2 information carried in the 200UPDATE message indicates that the called terminal successfully reserves the resource for the call.

The calling terminal and the called terminal reserve the resources for the call successfully when step 1813 is performed.

1812: The called terminal starts ringing, and sends the 180 ringing message to the first media server, where the 180 ringing message carries related information of the call.

1813: The first media server receives the 180 ringing message, and determines a first media resource corresponding to the related information based on the related information of the call.

It can be noted that this embodiment is described by using an example in which the first media resource is determined after the 180 ringing message is received. In another possible implementation, the first media server may determine the first media resource at any moment after receiving the INVITE message of the calling terminal.

1814: The first media server sends an UPDATE message to the calling terminal, where the UPDATE message carries SDP information of the first media resource, and the SDP information is used for performing media negotiation.

It can be noted that the UPDATE message is an example of the first media negotiation message in the embodiment shown in FIG. 7A and FIG. 7B and FIG. 7C, and the UPDATE message carries the resource information, for example, a resource ID, of the first media resource. In other words, a specific field of the SDP information of the first media resource carries the resource information.

1815: The calling terminal receives the UPDATE message, obtains the resource information of the first media resource from the UPDATE message, and sends a 200OK (UPDATE) message to the first media server, where the 200OK (UPDATE) message carries media capability information of the calling terminal, namely, a media negotiation result (for example, SDPA3 information) between the calling terminal and the second media server.

The 200OK (UPDATE) message is an example of the second media negotiation message in the embodiment shown in FIG. 7A and FIG. 7B and FIG. 7C. For a process of obtaining the resource information of the first media resource from the UPDATE message, refer to step 708.

1816: The first media server sends a 180 ringing message to the calling terminal.

1817: The first media server sends a media stream of the first media resource to the calling terminal.

1818: The calling terminal receives the media stream of the first media resource.

It can be noted that, in the foregoing steps 1814 and 1815, an example in which the calling terminal determines the resource information of the first media resource based on the first media negotiation message, namely, the UPDATE message is used. In another possible implementation, the calling terminal determines the resource information of the first media resource based on the media stream of the first media resource received in step 1818. It can be understood that, during one implementation process, the calling terminal may select one of the manners to determine the resource information, or may separately determine the resource information, to ensure obtaining of the resource information.

1819: The calling terminal receives interaction content data of the first media resource from the second media server via the target application client and based on the resource information of the first media resource.

It can be understood that signaling interaction or media stream transmission of the calling terminal in the CT domain and interaction of the calling terminal in the IT domain do not affect each other. In the foregoing steps, only an example in which the calling terminal obtains the content data interaction process after receiving the media stream in step 1819 is used for description. However, in some possible implementations, step 1819 may be performed at any moment after the resource information of the first media resource is determined. For example, an execution sequence of steps 1816 to 1818 and step 1819 may be reversed, or may be performed concurrently.

1820: The calling terminal receives the 180 ringing message, plays, based on the received media stream, the first media resource sent by the first media server, and displays, on the user interface for playing the first media resource, the interaction control and the corresponding interaction content data based on the received display data of the interaction control and interaction content data.

It can be understood that a sequence of receiving the 180 ringing message and the media stream is not limited in this embodiment of this application. In this embodiment, an example in which the media stream is first received and then the 180 ringing message is received is used for description. In some possible implementations, the calling terminal first receives the 180 ringing message, and then receives the media stream, or synchronously receives the media stream, and starts to play the received media stream. It can be noted that, for the calling terminal, the calling terminal starts to play the received media stream after receiving the 180 ringing message, so that objectives of resource playing and display of the interaction control can be achieved.

Optionally, the calling terminal receives a media stream of the second media resource pushed by the second media server, to display the user interface for playing the second media resource in the user interface for playing the first media resource, to form a picture-in-picture effect. Optionally, the interaction control of the second media resource and the corresponding interaction content data are displayed in the user interface for playing the second media resource.

1821: If the calling terminal detects an operation for triggering any interaction control, the calling terminal sends, to the second media server, an interaction request corresponding to the interaction control, where the interaction request is for implementing first media resource-based interaction.

1822: The second media server receives the interaction request sent by the calling terminal, and performs processing based on the first media resource.

1823: The called terminal sends a 200OK (INVITE) message to the calling terminal, where the 200OK (INVITE) message indicates that the called terminal picks up the call.

1824: The calling terminal stops playing the first media resource, and displays a pause picture for the first media resource.

1825: The called terminal sends a Bye message to the calling terminal, where the Bye message indicates that the called terminal hangs up.

1826: If the calling terminal detects a click operation on the pause picture, the calling terminal displays a portal website page on the started target application client.

According to the technical solution provided in this embodiment of this application, the second media server obtains the interaction data of the first media resource, so that the calling terminal can display the interaction data such as an interactive button, on-screen comments, and an animation effect on a layer overlaid on a screen of the calling terminal while playing the first media resource. This implements media interaction in a color ring back tone scenario, enriches experience of color ring back tone users, and improves interest of a video ring back tone service.

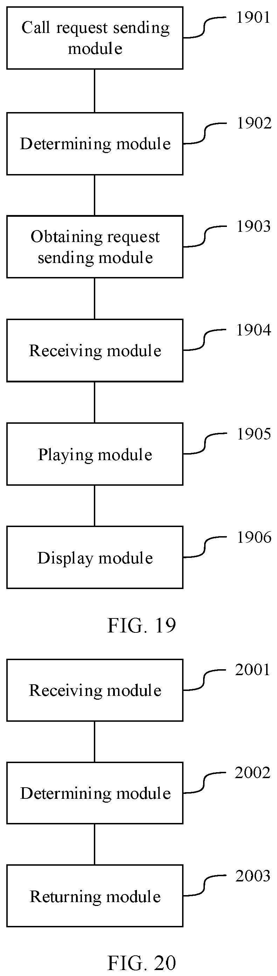

FIG. 19 is a schematic diagram of a structure of a media resource playing apparatus according to an embodiment of this application. The media resource playing apparatus is configured to perform the method performed by the calling terminal in the foregoing embodiments. Refer to FIG. 19. The media resource playing apparatus includes a call request sending module 1901, a determining module 1902, an obtaining request sending module 1903, a receiving module 1904, a playing module 1905, and a display module 1906.

The call request sending module 1901 is configured to send a call request to a called terminal. The call request is passed through a first media server.

The determining module 1902 is configured to determine resource information of a first media resource provided by the first media server.

The obtaining request sending module 1903 is configured to send an interaction data obtaining request to a second media server via a target application client. The interaction data obtaining request carries the resource information of the first media resource.

The receiving module 1904 is configured to receive interaction data of the first media resource that is returned by the second media server based on the resource information.

The playing module 1905 is configured to receive and play the first media resource sent by the first media server.

The display module 1906 is configured to display the interaction data of the first media resource on a user interface for playing the first media resource.

In a possible implementation, the first media server is a server in a communication technology CT domain, and the second media server is a server in an Internet technology IT domain.

In a possible implementation, the determining module 1902 includes any one of the following:
a first obtaining submodule, configured to execute the process of obtaining resource information from a first media negotiation message in step 708 or step 1102; and
a second obtaining submodule, configured to execute the process of obtaining resource information from a header of a media stream in step 713 or step 1102.

In a possible implementation, the first media negotiation message is an update message, and the resource information is included in session description protocol SDP information of the update message.

In a possible implementation, the resource information is included in supplemental enhancement information SEI of the header of the media stream.

In a possible implementation, the interaction data is interaction content data, the obtaining request sending module 1903 is further configured to perform step 702 or step 1802, and the apparatus further includes:
an address information receiving module 1904, configured to perform step 706 or step 1806.

In a possible implementation, the interaction data includes the interaction content data and display data of an interaction control.

In a possible implementation, the apparatus further includes:
an interaction request sending module, configured to perform step 1401 or step 1821.

In a possible implementation, the apparatus further includes a closing module, configured to perform step 1501.

In a possible implementation, the playing module 1905 is further configured to perform step 1502 or step 1824.

In a possible implementation, the playing module 1905 is further configured to perform step 1504.

In a possible implementation, the display module 1906 is further configured to perform the process of displaying a portal website page in step 1826 or step 1504.

In a possible implementation, the closing module is further configured to perform the process of closing a target application client in step 1504.

In a possible implementation, the apparatus further includes a session message sending module, configured to perform the process of sending a session end message in step 1504.

In a possible implementation, the apparatus further includes:
an obtaining module, configured to perform step 1104.

The playing module 1905 is configured to perform the process of playing a first media resource in full screen in step 1105.

The playing module 1905 is further configured to perform the process of playing a second media resource in a floating window in step 1105.

In a possible implementation, the playing module 1905 is further configured to perform the process of playing a second media resource in full screen and playing a first media resource in a floating window in step 1105.

In a possible implementation, the playing module 1905 is further configured to perform the process of playing a first media resource in a floating window and playing a second media resource in a floating window in step 1105.

In a possible implementation, the interaction data includes at least one of the following: access data on homepage, like data, comment data, shared data, and downloaded data.

In a possible implementation, the interaction control includes at least one of the following: an access control on homepage, a like control, a comment control, a sharing control, and a download control.

It can be noted that, for the media resource playing apparatus provided in the foregoing embodiment for playing a media resource, division into the functional modules is used as an example for description. In actual application, the functions are allocated to different functional modules for implementation as required. That is, an inner structure of the apparatus is divided into different functional modules to implement all or some of the functions described above. In addition, this apparatus embodiment and the media resource playing method embodiments provided in the foregoing embodiments pertain to a same concept. For a specific implementation process, refer to the method embodiments. Details are not described herein again.

In the technical solution provided in this embodiment of this application, supplement is provided for media resources in the CT domain. When the first media resource in the CT domain exists, the interaction data of the first media resource is obtained by using the second media server in the IT domain, so that the calling terminal can display the interaction control and corresponding content data such as an interactive button, on-screen comments, and an animation effect on a layer overlaid on a screen of the calling terminal while playing the first media resource. This implements media interaction in a color ring back tone scenario, enriches experience of color ring back tone users, and improves interest of a video ring back tone service. With the development and commercial use of 5G, in the background that IT network resources are not bottleneck and a network delay is shorter, the video ring back tone service can be extended more flexibly, for example, video playing is supported among stacked layers, an interaction function is provided on a video page, and rolling switching between video content is supported, to improve interest of the video ring back tone service.

FIG. 20 is a schematic diagram of a structure of a media server according to an embodiment of this application. Refer to FIG. 20. The media server includes a receiving module 2001, a determining module 2002, and a returning module 2003.

The receiving module 2001 is configured to receive an interaction data obtaining request that is sent by a calling terminal via a target application client. The interaction data obtaining request carries resource information of a first media resource.

The determining module 2002 is configured to determine interaction data of the first media resource based on the resource information.

The returning module 2003 is configured to return the interaction data to the calling terminal.

In a possible implementation, the determining module 2002 is configured to perform the process of determining interaction content data in step 709 or step 1819; and the returning module 2003 is configured to perform the process of returning the interaction content data in step 709 or step 1819.

In a possible implementation, the interaction data is interaction content data.

The receiving module 2001 is further configured to perform step 703 or step 1803.

The determining module 2002 is further configured to perform the process of determining display data in step 705.

The returning module 2003 is further configured to perform step 705 or step 1805.

In a possible implementation, the apparatus further includes a loading module, configured to perform the process of preloading display data in step 705.

In a possible implementation, a display data obtaining request further carries related information about a call in which the calling terminal participates. The apparatus further includes an authentication module, configured to perform step 704 or step 1804.

In a possible implementation:
The receiving module 2001 is further configured to perform the process of receiving a resource obtaining request in step 1503.

The determining module 2002 is further configured to perform the process of determining a third media resource in step 1503.

The returning module 2003 is further configured to perform the process of returning the third media resource in step 1503.

In a possible implementation, the apparatus further includes an establishment module, configured to perform the process of establishing a session in step 1503.

In a possible implementation, the apparatus further includes a release module, configured to perform the process of releasing the session in step 1504.

It can be noted that, for the media server provided in the foregoing embodiment for playing a media resource, division into the functional modules is used as an example for description. In actual application, the functions are allocated to different functional modules for implementation as required. That is, an inner structure of the apparatus is divided into different functional modules to implement all or some of the functions described above. In addition, this apparatus embodiment and the method embodiment on the second media server side in the media resource playing method provided in the foregoing embodiments pertain to a same concept. For a specific implementation process, refer to the method embodiments. Details are not described herein again.

In the technical solution provided in this embodiment of this application, supplement is provided for media resources in the CT domain. When the first media resource in the CT domain exists, the interaction data of the first media resource is obtained by using the second media server in the IT domain, so that the calling terminal can display the interaction control and corresponding content data such as an interactive button, on-screen comments, and an animation effect on a layer overlaid on a screen of the calling terminal while playing the first media resource. This implements media interaction in a color ring back tone scenario, enriches experience of color ring back tone users, and improves interest of a video ring back tone service. With the development and commercial use of 5G, in the background that IT network resources are not bottleneck and a network delay is shorter, the video ring back tone service can be extended more flexibly, for example, video playing is supported among stacked layers, an interaction function is provided on a video page, and rolling switching between video content is supported, to improve interest of the video ring back tone service.

In an example embodiment, a computer storage medium is further provided. The computer storage medium may be a computer-readable storage medium, for example, a memory including program code. The program code may be executed by a processor in a terminal to implement the media resource playing method on the calling terminal side in the foregoing embodiments. For example, the computer-readable storage medium may be a ROM, a RAM, a compact disc read-only memory (compact disc read-only memory, CD-ROM), a magnetic disk, a floppy disk, or an optical data storage device.

In an example embodiment, a computer storage medium is further provided. The computer storage medium may be a computer-readable storage medium, for example, a memory including program code. The program code may be executed by a processor in a terminal to implement the method on the second media server side in the foregoing embodiments. For example, the computer-readable storage medium may be a ROM, a RAM, a compact disc read-only memory (compact disc read-only memory, CD-ROM), a magnetic disk, a floppy disk, or an optical data storage device.

This application further provides a media resource playing system. The system includes a calling terminal, a first media server, and a second media server. In a possible implementation, the calling terminal, the first media server, and the second media server are respectively configured to perform the method on the calling terminal side, the method on the first media server side, and the method on the second media server side in the media resource playing methods provided in embodiments shown in FIG. 7A and FIG. 7B and FIG. 7C, FIG. 11, FIG. 14, FIG. 15, and FIG. 18A and FIG. 18B and FIG. 18C.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

It can be noted that, a person of ordinary skill in the art may be aware that, in combination with the examples described in embodiments disclosed in this specification, units, modules, chips, and method steps may be implemented by electronic hardware, computer software, or a combination thereof. To clearly describe the interchangeability between the hardware and the software, the foregoing has generally described compositions and steps of each example according to functions. Whether functions are performed in a hardware or software manner depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, module, unit, or a chip, refer to a corresponding process in the media resource playing method embodiments, and details are not described herein again.

In the several embodiments provided in this application, it can be understood that the disclosed system, apparatus, and method may be implemented in other manners. For example, the described apparatus embodiments are merely examples. For example, the modular division in the apparatus or unit division in the module is merely logical function division and may be other division in actual implementation. For example, a plurality of modules or units may be combined or integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or other forms.

The modules or units described as separate parts may or may not be physically separate, and parts displayed as modules or units may or may not be physical modules or units, may be in one position, or may be distributed on a plurality of computer devices and chips. Some or all of the modules or units may be selected according to actual needs to achieve the objectives of the solutions of embodiments of this application.

In addition, functional modules or units in embodiments of this application may be integrated into one target processing module, or each of the modules or units may exist alone physically, or two or more modules or units may be integrated into one target processing module. The integrated module or unit may be implemented in a form of hardware, or may be implemented in a form of a software functional unit.

## Claims

1. A media resource playing method, executed by a calling terminal, wherein the method comprises:
sending (S701) a call request to a called terminal, wherein the call request is passed through a first media server, wherein the first media server is configured to provide a video ring back tone service;
determining resource information of a first media resource provided by the first media server;
sending (S702) an interaction data obtaining request to a second media server via a target application client installed on the calling terminal, wherein the interaction data obtaining request carries the resource information of the first media resource, wherein the target application client is a ringback tone application configured to play a media resource in a ringing phase;
receiving (S705) interaction data of the first media resource that is returned by the second media server based on the resource information, wherein the second media server is configured to provide an interaction data service for users;
receiving and playing (S713) the first media resource sent by the first media server; and
displaying (S714) the interaction data of the first media resource on a user interface for playing the first media resource,
wherein
the first media server is a server in a communication technology, CT, domain, and the second media server is a server in an Internet technology, IT, domain, and
the target application client is configured to access the second media server via an IT network and to display, by receiving the interaction data using a hypertext transfer protocol, HTTP, or a hypertext transfer protocol secure, HTTPS, the interaction data in the IT domain on the user interface for playing the media resource in the CT domain in the ringing phase,
wherein after the displaying the interaction data of the first media resource on a user interface for playing the first media resource, the method further comprises:
stopping playing the first media resource and displaying a pause picture for the first media resource if a pick-up message of the called terminal is received,
wherein after the stopping playing the first media resource and displaying the pause picture for the first media resource if an off-hook message of the called terminal is received, the method further comprises:
if an operation for continuing playing is detected on the pause picture, obtaining a third media resource from the second media server and playing the third media resource, wherein the third media resource matches the first media resource.

2. The method according to claim 1, wherein the determining resource information of the first media resource provided by the first media server comprises any one of the following:
obtaining the resource information of the first media resource from a first media negotiation message sent by the first media server; and
obtaining, from a header of a media stream of the first media resource transmitted by the first media server, the resource information carried by the first media resource.

3. The method according to claim 2, wherein the first media negotiation message is an update message, and the resource information is comprised in session description protocol SDP information of the update message.

4. The method according to claim 2, wherein the resource information is comprised in supplemental enhancement information SEI of the header of the media stream.

5. The method according to any one of claims 1 to 4, wherein the interaction data is interaction content data, and before the sending an interaction data obtaining request to the second media server via the target application client, the method further comprises:
sending a display data obtaining request to the second media server, wherein the display data obtaining request indicates to obtain display data of an interaction control; and
receiving address information returned by the second media server based on the display data obtaining request, wherein the address information provides the display data of the interaction control; and obtaining the display data of the interaction control from the second media server based on the address information.

6. The method according to claim 5, wherein after the displaying the interaction data of the first media resource on the user interface for playing the first media resource, the method further comprises:
if an operation for triggering any interaction control is detected, sending, to the second media server, an interaction request corresponding to the interaction control, wherein the interaction request is for implementing first media resource-based interaction.

7. The method according to any one of claims 1 to 5, wherein after the stopping playing the first media resource and displaying the pause picture for the first media resource if an off-hook message of the called terminal is received, the method further comprises:
if an operation for triggering the pause picture is detected, displaying a portal website page on the started target application client.

8. The method according to any one of claims 1 to 7, wherein the method further comprises:
obtaining a second media resource from the second media server via the target application client; and
the playing the first media resource sent by the first media server comprises:
playing the first media resource in full screen; and
the method further comprises: playing the second media resource in a mute mode in a floating window on the user interface for playing the first media resource.

9. The method according to any one of claims 1 to 8, wherein the interaction data comprises at least one of the following: access data on homepage, like data, comment data, shared data, and downloaded data.

10. The method according to claim 5 or 6, wherein the interaction control comprises at least one of the following: an access control on homepage, a like control, a comment control, a sharing control, and a download control.

11. A terminal (500) device comprising a processor (507) and a memory (502), wherein the memory stores at least one piece of program code, and the program code is loaded and executed by the processor to implement the media resource playing method according to any one of claims 1 to 10.

12. A computer storage medium, wherein the storage medium stores at least one piece of program code, and the program code is loaded and executed by a processor to implement the media resource playing method according to any one of claims 1 to 10.

13. A program product comprising a computer program, that when executed by a computer, the method according to any one of claims 1 to 10 is implemented.

## Patentansprüche

1. Medienressourcenwiedergabeverfahren, das durch ein anrufendes Endgerät ausgeführt wird, wobei das Verfahren umfasst:
Senden (S701) einer Anrufanforderung an ein angerufenes Endgerät, wobei die Anrufanforderung über einen ersten Medienserver geleitet wird, wobei der erste Medienserver konfiguriert ist, um einen Videorückruftondienst bereitzustellen;
Bestimmen von Ressourceninformationen einer ersten Medienressource, die durch den ersten Medienserver bereitgestellt wird;
Senden (S702) einer Anforderung zum Erhalten von Interaktionsdaten an einen zweiten Medienserver über einen auf dem anrufenden Endgerät installierten Zielanwendungsclient, wobei die Anforderung zum Erhalten von Interaktionsdaten die Ressourceninformationen der ersten Medienressource trägt, wobei der Zielanwendungsclient eine Rückruftonanwendung ist, die konfiguriert ist, um eine Medienressource während einer Klingelphase wiederzugeben;
Empfangen (S705) von Interaktionsdaten der ersten Medienressource, die durch den zweiten Medienserver basierend auf den Ressourceninformationen zurückgegeben werden, wobei der zweite Medienserver konfiguriert ist, um einen Interaktionsdatendienst für Benutzer bereitzustellen;
Empfangen und Wiedergeben (S713) der ersten Medienressource, die durch den ersten Medienserver gesendet wird; und
Anzeigen (S714) der Interaktionsdaten der ersten Medienressource auf einer Benutzeroberfläche zum Wiedergeben der ersten Medienressource,
wobei
der erste Medienserver ein Server in einer Kommunikationstechnologie(CT)-Domäne ist und der zweite Medienserver ein Server in einer Internettechnologie(IT)-Domäne ist und der Zielanwendungsclient konfiguriert ist, um über ein IT-Netzwerk auf den zweiten Medienserver zuzugreifen und, durch Empfangen der Interaktionsdaten unter Verwendung eines Hypertext Transfer Protocol, HTTP, oder eines Hypertext Transfer Protocol Secure, HTTPS, die Interaktionsdaten in der IT-Domäne auf der Benutzeroberfläche zum Wiedergeben der Medienressource in der CT-Domäne während der Klingelphase anzuzeigen,
wobei das Verfahren nach dem Anzeigen der Interaktionsdaten der ersten Medienressource auf einer Benutzeroberfläche zum Wiedergeben der ersten Medienressource ferner umfasst:
Stoppen des Wiedergebens der ersten Medienressource und Anzeigen eines Pausenbilds für die erste Medienressource, falls eine Annahmenachricht des angerufenen Endgeräts empfangen wird,
wobei das Verfahren nach dem Stoppen des Wiedergebens der ersten Medienressource und dem Anzeigen des Pausenbilds für die erste Medienressource, falls eine Abhebenachricht des angerufenen Endgeräts empfangen wird, ferner umfasst:
falls bei dem Pausenbild ein Vorgang zum Fortsetzen des Wiedergebens erkannt wird, Erhalten einer dritten Medienressource von dem zweiten Medienserver und Wiedergeben der dritten Medienressource, wobei die dritte Medienressource mit der ersten Medienressource übereinstimmt.

2. Verfahren nach Anspruch 1, wobei das Bestimmen von Ressourceninformationen der durch den ersten Medienserver bereitgestellten ersten Medienressource ein beliebiges der Folgenden umfasst:
Erhalten der Ressourceninformationen der ersten Medienressource aus einer ersten Medienaushandlungsnachricht, die durch den ersten Medienserver gesendet wird; und
Erhalten, aus einem Header eines Medienstreams der durch den ersten Medienserver übertragenen ersten Medienressource, der Ressourceninformationen, die durch die erste Medienressource getragen werden.

3. Verfahren nach Anspruch 2, wobei die erste Medienaushandlungsnachricht eine Aktualisierungsnachricht ist und die Ressourceninformationen in Session-Description-Protocol(SDP)-Informationen der Aktualisierungsnachricht enthalten sind.

4. Verfahren nach Anspruch 2, wobei die Ressourceninformationen in Supplemental-Enhancement-Informationen, SEI, des Headers des Medienstreams enthalten sind.

5. Verfahren nach einem der Ansprüche 1 bis 4, wobei die Interaktionsdaten Interaktionsinhaltsdaten sind, und das Verfahren vor dem Senden einer Anforderung zum Erhalten von Interaktionsdaten an den zweiten Medienserver über den Zielanwendungsclient ferner umfasst:
Senden einer Anforderung zum Erhalten von Anzeigedaten an den zweiten Medienserver, wobei die Anforderung zum Erhalten von Anzeigedaten angibt, dass Anzeigedaten einer Interaktionssteuerung erhalten werden sollen; und
Empfangen von Adressinformationen, die durch den zweiten Medienserver basierend auf der Anforderung zum Erhalten von Anzeigedaten zurückgegeben werden, wobei die Adressinformationen die Anzeigedaten der Interaktionssteuerung bereitstellen; und
Erhalten der Anzeigedaten der Interaktionssteuerung von dem zweiten Medienserver basierend auf den Adressinformationen.

6. Verfahren nach Anspruch 5, wobei das Verfahren nach dem Anzeigen der Interaktionsdaten der ersten Medienressource auf der Benutzeroberfläche zum Wiedergeben der ersten Medienressource ferner umfasst:
falls ein Vorgang zum Auslösen einer beliebigen Interaktionssteuerung erkannt wird, Senden, an den zweiten Medienserver, einer Interaktionsanforderung, die der Interaktionssteuerung entspricht, wobei die Interaktionsanforderung zum Implementieren einer ersten medienressourcenbasierten Interaktion dient.

7. Verfahren nach einem der Ansprüche 1 bis 5, wobei das Verfahren nach dem Stoppen des Wiedergebens der ersten Medienressource und dem Anzeigen des Pausenbilds für die erste Medienressource, falls eine Abhebenachricht des angerufenen Endgeräts empfangen wird, ferner umfasst:
falls ein Vorgang zum Auslösen des Pausenbilds erkannt wird, Anzeigen einer Seite einer Portal-Website auf dem gestarteten Zielanwendungsclient.

8. Verfahren nach einem der Ansprüche 1 bis 7, wobei das Verfahren ferner umfasst:
Erhalten einer zweiten Medienressource von dem zweiten Medienserver über den Zielanwendungsclient; und
das Wiedergeben der ersten Medienressource, die durch den ersten Medienserver gesendet wird, umfasst:
Wiedergeben der ersten Medienressource im Vollbildmodus; und
das Verfahren ferner umfasst: Wiedergeben der zweiten Medienressource in einem stummen Modus in einem schwebenden Fenster auf der Benutzeroberfläche zum Wiedergeben der ersten Medienressource.

9. Verfahren nach einem der Ansprüche 1 bis 8, wobei die Interaktionsdaten mindestens eines der folgenden umfassen: Zugriffsdaten für eine Homepage, Like-Daten, Kommentardaten, geteilte Daten und heruntergeladene Daten.

10. Verfahren nach Anspruch 5 oder 6, wobei die Interaktionssteuerung mindestens eine der folgenden umfasst: eine Zugriffssteuerung für die Homepage, eine Like-Steuerung, eine Kommentarsteuerung, eine Steuerung für ein Teilen und eine Download-Steuerung.

11. Endgerätvorrichtung (500), die einen Prozessor (507) und einen Speicher (502) umfasst, wobei der Speicher mindestens ein Programmcodeelement speichert und der Programmcode durch den Prozessor geladen und ausgeführt wird, um das Medienressourcenwiedergabeverfahren nach einem der Ansprüche 1 bis 10 zu implementieren.

12. Computerspeicherungsmedium, wobei das Speicherungsmedium mindestens ein Programmcodeelement speichert und der Programmcode durch einen Prozessor geladen und ausgeführt wird, um das Medienressourcenwiedergabeverfahren nach einem der Ansprüche 1 bis 10 zu implementieren.

13. Programmprodukt, das ein Computerprogramm umfasst, damit, wenn es durch einen Computer ausgeführt wird, das Verfahren nach einem der Ansprüche 1 bis 10 implementiert wird.

## Revendications

1. Procédé de lecture de ressource multimédia, exécuté par un terminal d'appel, dans lequel le procédé comprend :
l'envoi (S701) d'une demande d'appel à un terminal appelé, dans lequel la demande d'appel passe par un premier serveur multimédia, dans lequel le premier serveur multimédia est configuré pour fournir un service de tonalité de retour d'appel vidéo ;
la détermination d'informations de ressource d'une première ressource multimédia fournie par le premier serveur multimédia ;
l'envoi (S702) d'une demande d'obtention de données d'interaction à un second serveur multimédia par l'intermédiaire d'un client d'application cible installé sur le terminal d'appel, dans lequel la demande d'obtention de données d'interaction contient les informations de ressource de la première ressource multimédia, dans lequel le client d'application cible est une application de tonalité de retour d'appel configurée pour lire une ressource multimédia dans une phase de sonnerie ;
la réception (S705) de données d'interaction de la première ressource multimédia qui sont renvoyées par le second serveur multimédia sur la base des informations de ressource, dans lequel le second serveur multimédia est configuré pour fournir un service de données d'interaction à des utilisateurs ;
la réception et la lecture (S713) de la première ressource multimédia envoyée par le premier serveur multimédia ; et
l'affichage (S714) des données d'interaction de la première ressource multimédia sur une interface utilisateur pour la lecture de la première ressource multimédia,
dans lequel
le premier serveur multimédia est un serveur dans un domaine de technologies des communications, CT, et le second serveur multimédia est un serveur dans un domaine de technologies d'Internet, IT, et le client d'application cible est configuré pour accéder au second serveur multimédia par l'intermédiaire d'un réseau IT et pour afficher, en recevant les données d'interaction à l'aide d'un protocole de transfert hypertexte, HTTP, ou d'un protocole de transfert hypertexte sécurisé, HTTPS, les données d'interaction dans le domaine IT sur l'interface utilisateur pour la lecture de la ressource multimédia dans le domaine CT dans la phase de sonnerie,
dans lequel, après l'affichage des données d'interaction de la première ressource multimédia sur une interface utilisateur pour la lecture de la première ressource multimédia, le procédé comprend en outre :
l'arrêt de la lecture de la première ressource multimédia et l'affichage d'une image de pause pour la première ressource multimédia si un message de prise en charge du terminal appelé est reçu,
dans lequel, après l'arrêt de la lecture de la première ressource multimédia et l'affichage de l'image de pause pour la première ressource multimédia si un message de décrochage du terminal appelé est reçu, le procédé comprend en outre :
si une opération de poursuite de la lecture est détectée sur l'image de pause,
l'obtention d'une troisième ressource multimédia en provenance du second serveur multimédia et la lecture de la troisième ressource multimédia, dans lequel la troisième ressource multimédia correspond à la première ressource multimédia.

2. Procédé selon la revendication 1, dans lequel la détermination d'informations de ressource de la première ressource multimédia fournie par le premier serveur multimédia comprend l'un quelconque parmi les éléments suivants :
l'obtention des informations de ressource de la première ressource multimédia à partir d'un premier message de négociation multimédia envoyé par le premier serveur multimédia ; et
l'obtention, à partir d'un en-tête d'un flux multimédia de la première ressource multimédia transmise par le premier serveur multimédia, des informations de ressource contenues par la première ressource multimédia.

3. Procédé selon la revendication 2, dans lequel le premier message de négociation multimédia est un message de mise à jour, et les informations de ressource sont comprises dans des informations de protocole de description de session SDP du message de mise à jour.

4. Procédé selon la revendication 2, dans lequel les informations de ressource sont comprises dans des informations d'amélioration supplémentaires SEI de l'en-tête du flux multimédia.

5. Procédé selon l'une quelconque des revendications 1 à 4, dans lequel les données d'interaction sont des données de contenu d'interaction, et avant l'envoi d'une demande d'obtention de données d'interaction au second serveur multimédia par l'intermédiaire du client d'application cible, le procédé comprend en outre :
l'envoi d'une demande d'obtention de données d'affichage au second serveur multimédia, dans lequel la demande d'obtention de données d'affichage indique d'obtenir des données d'affichage d'une commande d'interaction ; et
la réception d'informations d'adresse renvoyées par le second serveur multimédia sur la base de la demande d'obtention de données d'affichage, dans lequel les informations d'adresse fournissent les données d'affichage de la commande d'interaction ; et l'obtention des données d'affichage de la commande d'interaction à partir du second serveur multimédia sur la base des informations d'adresse.

6. Procédé selon la revendication 5, dans lequel, après l'affichage des données d'interaction de la première ressource multimédia sur l'interface utilisateur pour la lecture de la première ressource multimédia, le procédé comprend en outre :
si une opération de déclenchement d'une quelconque commande d'interaction est détectée, l'envoi, au second serveur multimédia, d'une demande d'interaction correspondant à la commande d'interaction, dans lequel la demande d'interaction est destinée à la mise en œuvre d'une interaction basée sur la première ressource multimédia.

7. Procédé selon l'une quelconque des revendications 1 à 5, dans lequel, après l'arrêt de la lecture de la première ressource multimédia et l'affichage de l'image de pause pour la première ressource multimédia si un message de décrochage du terminal appelé est reçu, le procédé comprend en outre :
si une opération pour le déclenchement de l'image de pause est détectée, l'affichage d'une page de site Web de portail sur le client d'application cible démarré.

8. Procédé selon l'une quelconque des revendications 1 à 7, dans lequel le procédé comprend en outre : l'obtention d'une deuxième ressource multimédia à partir du second serveur multimédia par l'intermédiaire du client d'application cible ; et
la lecture de la première ressource multimédia envoyée par le premier serveur multimédia comprend :
la lecture de la première ressource multimédia en plein écran ; et
le procédé comprend en outre : la lecture de la deuxième ressource multimédia en mode silencieux dans une fenêtre flottante sur l'interface utilisateur pour la lecture de la première ressource multimédia.

9. Procédé selon l'une quelconque des revendications 1 à 8, dans lequel les données d'interaction comprennent au moins l'un parmi les éléments suivants : des données d'accès sur la page d'accueil, des données « j'aime », des données de commentaires, des données partagées, et des données téléchargées.

10. Procédé selon la revendication 5 ou 6, dans lequel la commande d'interaction comprend au moins l'un parmi les éléments suivants : une commande d'accès sur la page d'accueil, une commande « j'aime », une commande de commentaire, une commande de partage, et une commande de téléchargement.

11. Dispositif terminal (500) comprenant un processeur (507) et une mémoire (502), dans lequel la mémoire stocke au moins un élément de code de programme, et le code de programme est chargé et exécuté par le processeur pour mettre en œuvre le procédé de lecture de ressource multimédia selon l'une quelconque des revendications 1 à 10.

12. Support de stockage informatique, dans lequel le support de stockage stocke au moins un élément de code de programme, et le code de programme est chargé et exécuté par un processeur pour mettre en œuvre le procédé de lecture de ressource multimédia selon l'une quelconque des revendications 1 à 10.

13. Produit-programme comprenant un programme informatique, qui, lorsqu'il est exécuté par un ordinateur, met en œuvre le procédé selon l'une quelconque des revendications 1 à 10.
